(19) Europäisches Patentamt
European Patent Office
Office européen des brevets

(11) **EP 2 236 480 A1**

(12) **EUROPEAN PATENT APPLICATION**

(43) Date of publication:
06.10.2010 Bulletin 2010/40

(51) Int Cl.:
*C04B 37/00* (2006.01)   *C04B 38/00* (2006.01)
*B01J 35/04* (2006.01)   *F01N 3/022* (2006.01)

(21) Application number: 10001810.0

(22) Date of filing: 23.02.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 30.03.2009 PCT/JP2009/056532

(71) Applicant: Ibiden Co., Ltd.
Ogaki-shi, Gifu 503-8604 (JP)

(72) Inventors:
• Miyata, Akikazu
Ibi-gun
Gifu 501-0695 (JP)
• Kanai, Masanori
Ibi-gun
Gifu 501-0695 (JP)

(74) Representative: HOFFMANN EITLE
Patent- und Rechtsanwälte
Arabellastrasse 4
81925 München (DE)

(54) **Sealing material for honeycomb structured body, honeycomb structured body and method for manufacturing honeycomb structured body**

(57)    An object of the present invention is to provide a sealing material for a honeycomb structured body, which can secure safety for human body of the sealing material for a honeycomb structured body containing inorganic fibers, does not form a gel and has good applicability to ceramic blocks and the like even long after preparation of the sealing material for a honeycomb structured body. The sealing material for a honeycomb structured body according to the present invention contains inorganic fibers including a biosoluble inorganic compound; inorganic particles; and an ion adsorbent in an amount of 0.1% by weight or more.

**Fig. 1**

**Description**

TECHNICAL FIELD

The present invention relates to a sealing material for a honeycomb structured body, a honeycomb structured body, and a method for manufacturing a honeycomb structured body.

BACKGROUND ART

Honeycomb structured bodies have been used as a filter for removing particulates and the like from exhaust gases discharged from an internal combustion engine such as a diesel engine or as a catalyst supporting carrier for converting toxic components such as HC (hydrocarbon) and CO (carbon monoxide) from exhaust gases. Inorganic fibers have been used as materials for various constituent members in a honeycomb structured body. Specifically, for example, there have been used sealing material containing inorganic fibers, such as a sealing material (adhesive) for combining a plurality of honeycomb fired bodies to construct a ceramic block and a sealing material (also referred to as peripheral sealing material or peripheral coating material) to be applied on the periphery of the ceramic block.

In the case where such inorganic fibers are taken into human body, especially in the lung, and remain there for a long time, the inorganic fibers might be harmful to human body. Therefore, it is desired that the inorganic fibers used in the sealing material are highly safe for human body.

Patent Document 1 has disclosed a sealing material containing, as inorganic fibers, at least one compound selected from the group consisting of an alkali metal compound, an alkaline earth metal compound and a boron compound.

The inorganic fibers containing the compound described in Patent Document 1 are so-called biosoluble fibers. The biosoluble fibers are soluble in physiological saline solution. Therefore, if taken into human body, the biosoluble fibers are dissolved and discharged out of the body, and this is why they are considered to be highly safe for human body.

Patent Document 1: WO05/110578 A1

DISCLOSURE OF THE INVENTION

PROBLEMS TO BE SOLVED BY THE INVENTION

The sealing material disclosed in Patent Document 1 is prepared by mixing an inorganic binder, an organic binder, inorganic particles, water, and the like in addition to the foregoing inorganic fibers as a paste-like mixture so as to be able to form a predetermined sealing material layer by applying the sealing material on a ceramic block or a honeycomb fired body.

However, when a sealing material is prepared using the biosoluble fibers as inorganic fibers and optionally adding an oxide sol and then stored, aggregation or gelation occurs in the paste-like sealing material along with the lapse of time. As a result, the viscosity of the sealing material increases, thereby reducing the flowability. When a phenomenon such as aggregation or gelation occurs in the sealing material, application of the sealing material to the ceramic block or the like becomes difficult, which has negative effects on the processability. Moreover, aggregation or gelation of the sealing material makes it difficult to uniformly apply the sealing material on the ceramic block and the like. As a result, variations tend to occur in the thickness of the applied sealing material, which causes variations in the final strength of the sealing material layer.

The present invention has been devised to solve the foregoing problems. An object of the present invention is to provide a sealing material for a honeycomb structured body, which contains well-biosoluble inorganic fibers and has good applicability to the ceramic block and the like even long after the preparation of the sealing material for a honeycomb structured body.
Other objects of the present invention are to provide a honeycomb structured body produced by using the aforementioned sealing material for a honeycomb structured body, and to provide a method for manufacturing the aforementioned honeycomb structured body.

MEANS FOR SOLVING THE PROBLEM

The present inventors have studied the causes of the aggregation or gelation of the sealing material. As a result, they have found that, as the pH value of a sealing material paste increases, gelation of the sealing material becomes more likely to occur due to gelation of the inorganic particles and/or the oxide gel contained in the sealing material.

Although detailed mechanisms of the gelation of the sealing material have not been known, the mechanisms may be as follows.

That is, normally, electrical double layers are formed on the surfaces of the inorganic particles and the oxide sol contained in the sealing material. The electrical double layers are thought to allow the inorganic particles and the oxide sol to stably exist dispersed.

However, when the pH value of the sealing material paste increases to, for example, more than 6 (namely, under neutral conditions of around pH 7), polyvalent metal ions such as $Ca^{2+}$ (calcium ion), and $Mg^{2+}$ (magnesium ion) contained in the biosoluble fibers elute and interfere with the surface charge of the inorganic particles and/or the oxide sol. Due to the interference, the charge balance on the surface of the inorganic particles and/or the oxide sol is disturbed so that the organic particles and/or the oxide sol may aggregate, presumably causing gelation of the sealing material.

The pH value of the sealing material supposedly has an influence on frequency of diffusion contact between the polyvalent metal ions and inorganic particles and/or between the polyvalent metal ions and the oxide sol. A higher pH value increases frequency of the diffusion contact (increases the reaction rate), and thus gelation of the sealing material may be accelerated.

The term "gelation" used herein refers to a phenomenon of viscosity increase due to aggregation, association, or phase change of solid contents dispersed in a sol, which is caused by changes in the pH, presence of a polyvalent metal ion, and may cause increase of the viscosity of the sealing material paste.

Furthermore, it has been revealed that adjusting the sealing material to be acidic (pH 6 or lower) can prevent the polyvalent metal ions from eluting from the biosoluble fibers, and thus gelation of the sealing material may be prevented from occurring. In the case where the sealing material is acidic, it is possible to prevent gelation of the sealing material. However, there is still a problem that, when the acidic sealing material is solidified, the strength of the solidified sealing material is smaller than the strength of a sealing material which is free from the biosoluble fibers.

As a result of those investigations, the present inventors have found that it is possible to provide a sealing material for a honeycomb structured body, which has good applicability to the ceramic block and the like even long after the preparation of the sealing material paste and which has superior strength after being solidified by preventing the concentration of the polyvalent metal ions from decreasing or by preventing the polyvalent metal ions from existing in the sealing material before the polyvalent metal ions eluted from the biosoluble fibers diffuse and come into contact with the inorganic particles and/or the oxide sol, and thereby completing the present invention.

The mechanism of gelation of the sealing material may be mechanisms other than those mentioned earlier. Since the constitution of the present invention has been confirmed to constantly provide the aforementioned effects, the effects of the present invention are not varied depending upon the mechanism to be employed.

Namely, the sealing material for a honeycomb structured body according to Claim 1 contains inorganic fibers including a biosoluble inorganic compound; inorganic particles; and an ion adsorbent in an amount of 0.1% by weight or more.

The inorganic fibers contained in the sealing material for a honeycomb structured body according to Claim 1 are biosoluble fibers. Therefore, even if the inorganic fibers are taken into a human body, as they are soluble under physiological conditions, safety for human body of the sealing material for a honeycomb structured body containing the inorganic fibers can be secured. Further, gelation of the sealing material for a honeycomb structured body does not occur and the sealing material has good applicability to the ceramic block and the like even long after the preparation of the sealing material paste.

Since the sealing material for a honeycomb structured body according to Claim 1 contains the ion adsorbent, the sealing material can adsorb polyvalent metal ions such as $Ca^{21}$ and $Mg^{2+}$ eluted from the biosoluble fibers. Therefore, the concentration of the polyvalent metal ions in the sealing material for a honeycomb structured body is decreased, and thus the polyvalent metal ions less frequently diffuse and come into contact with the inorganic particles and/or the oxide sol. As a result, aggregation, association or the like due to changes in the surface charge among the inorganic particles, among the inorganic particles and the oxide sol, or among the oxide sol is suppressed, which may lead to prevention of gelation of the sealing material for a honeycomb structured body.

Moreover, the sealing material for a honeycomb structured body according to Claim 1 can increase the strength of the solidified sealing material for a honeycomb structured body.

The ion adsorbent content in the sealing material for a honeycomb structured body according to Claim 1 is preferably 0.1% by weight or more, and preferably 0.2% by weight or more, though the content may vary depending on the kinds of the ion adsorbent. This is because, the ion adsorbent content of less than 0.1% by weight in the sealing material for a honeycomb structured body results in insufficient adsorption amount or adsorption rate of the polyvalent metal ions eluted from the inorganic fibers, and as a result, gelation of the sealing material for a honeycomb structured body may occur within 24 hours of its preparation. Moreover, the ion adsorbent content of 0.2% by weight or more in the sealing material for a honeycomb structured body may favorably increase the strength of the solidified sealing material for a honeycomb structured body.

In the sealing material for a honeycomb structured body according to Claim 2, the inorganic compound is at least one member selected from the group consisting of alkali metal compounds and alkaline earth metal compounds. Inclusion of the inorganic compound enables production of biosoluble inorganic fibers.

In the sealing material for a honeycomb structured body according to Claim 3, the ion adsorbent is at least one member selected from the group consisting of silica adsorbents, alumina adsorbents, zeolite adsorbents, clay adsorbents, mesoporous adsorbents, polyvalent metal salts, and activated carbon. Those adsorbents are desirable because they are chemically stable as inorganic adsorbents and are easily obtainable.

As the sealing material for a honeycomb structured body according to Claim 4, the ion adsorbent may be a clay adsorbent. Since a clay adsorbent has high ion adsorption properties and is chemically stable, it may be suitably used as the ion adsorbent for the sealing material for a honeycomb structured body.

In the sealing material for a honeycomb structured body according to Claim 5, the clay adsorbent is at least one member selected from the group consisting of bentonite, activated white clay, and montmorillonite. The clay adsorbents are easily obtainable and are excellent in ion adsorption properties. For those reasons, the clay adsorbents are suitable as the ion adsorbent to be used in the sealing material for a honeycomb structured body of the present invention. Since bentonite or the like itself has adhesion, it can function as inorganic binders as well. Therefore, use of the inorganic binder may be omitted in preparation of the sealing material for a honeycomb structured body.

In the sealing material for a honeycomb structured body according to Claim 6, the ion adsorbent is at least one of a zeolite adsorbent and activated carbon. Those ion adsorbents have high ion adsorption properties and are chemically stable, and thus they can prolong the durability period for use of the sealing material for a honeycomb structured body.

As the sealing material for a honeycomb structured body according to Claim 7, the zeolite adsorbent may be specifically at least one member selected from the group consisting of alminosilicate zeolite, metallosilicate zeolite, and aluminophosphate zeolite. The aforementioned zeolites, among zeolite adsorbents, have high ion adsorption properties, are easily obtainable, and are readily handled in processing.

In the sealing material for a honeycomb structured body according to Claim 8, the ion adsorbent is a polyvalent metal salt.

Use of a polyvalent metal salt, even in a small amount, provides a good effect for preventing gelation, and thus the strength of the solidified sealing material for a honeycomb structured body can be improved.

As the sealing material for a honeycomb structured body according to Claim 9, the polyvalent metal salt may be specifically at least one member selected from the group consisting of aluminum phosphate, iron phosphate, magnesium phosphate, and aluminum fluoride. Since the aforementioned polyvalent metal salts have a low solubility, elution of polyvalent metal ions is less likely to occur. Also, the polyvalent metal salts have high ion adsorption properties, are easily obtainable, and are readily handled in processing.

The sealing material for a honeycomb structured body according to Claim 10 further contains an oxide sol. The sealing material for a honeycomb structured body according to Claim 10 can be prevented from becoming a gel in a short time even under conditions where gelation of conventional sealing materials easily occurs, especially under alkaline conditions. Moreover, the strength of the solidified sealing material for a honeycomb structured body can be improved due to the oxide sol contained therein.

The honeycomb structured body according to Claim 11 includes a ceramic block including a honeycomb fired body in which a plurality of through holes are longitudinally formed with a partition wall interposed therebetween; and a peripheral sealing material layer formed on a peripheral surface of the ceramic block, wherein the peripheral sealing material layer is formed of the solidified sealing material for a honeycomb structured body according to any one of Claims 1 to 10.

In the honeycomb structured body according to Claim 11, biosoluble fibers are used as one of the materials forming the peripheral sealing material layer. For this reason, the honeycomb structured body is highly safe for human body and can be safely handled by users such as operators and consumers. Further, in the method for manufacturing the honeycomb structured body according to Claim 11, gelation of the sealing material for a honeycomb structured body does not occur after preparation of the sealing material for a honeycomb structured body until it is actually used. Therefore, it is possible to prevent uneven thickness of the peripheral sealing material layer due to gelation in forming the peripheral sealing material layer. Accordingly, variation or reduction in the strength of the peripheral sealing material layer caused by uneven thickness can be prevented from occurring.

As the honeycomb structured body according to Claim 12, the ceramic block may include a plurality of the honeycomb fired bodies and an adhesive layer formed between side surfaces of the plurality of the honeycomb fired bodies.

As the honeycomb structured body according to Claim 13, the adhesive layer may be formed of a solidified adhesive.

In the honeycomb structured body according to Claim 14, the adhesive is the sealing material for a honeycomb structured body according to any one of Claims 1 to 10. In the honeycomb structured body formed of a plurality of the honeycomb fired bodies, adhesive layers are required between the honeycomb fired bodies, which inevitably increase the total amount of the inorganic fibers contained in the honeycomb structured body. In the case of a conventional honeycomb structured body, the chances of taking the inorganic fibers into human body are increased along with the increase of the adhesive layer. On the other hand, the sealing material for a honeycomb structured body according to any one of Claims 1 to 10 is used as an adhesive in the honeycomb structured body according to Claim 14. Accordingly, even in the case where the total amount of the inorganic fibers is increased in the honeycomb structured body as a whole, the safety of the honeycomb structured body for human body can be secured.

The method for manufacturing a honeycomb structured body according to Claim 15 includes: molding ceramic materials to construct a honeycomb molded body in which a plurality of through holes are longitudinally formed with a partition wall interposed therebetween; constructing a ceramic block including a honeycomb fired body obtained after heat treatment of the honeycomb molded body; and solidifying a peripheral sealing material paste layer formed on a peripheral surface of the ceramic block to form a peripheral sealing material layer, the method further including preparing a sealing material for a honeycomb structured body by mixing at least inorganic fibers containing a biosoluble inorganic compound, inorganic particles, and an ion adsorbent in an amount of 0.1% by weight or more, the peripheral sealing material paste layer being formed of the sealing material for a honeycomb structured body.

In the method for manufacturing a honeycomb structured body according to Claim 15, as the sealing material for a honeycomb structured body to be prepared contains 0.1% by weight or more of the ion adsorbent, the inorganic particles do not aggregate or associate or the like with each other after preparation of the sealing material paste for a honeycomb structured body, and thus gelation of the sealing material does not occur. As a result, it is possible to prevent decrease in the flowability of the sealing material paste caused by increase in the viscosity even long after the preparation of the sealing material paste. Moreover, as the flowability of the sealing material paste for a honeycomb structured body can be kept at a high level, it is easy to manage the use and the like of the sealing material paste. Further, processability in forming the peripheral sealing material paste layer on the peripheral surface of the ceramic block can be improved in forming the peripheral sealing material layer. Moreover, the strength of the solidified peripheral sealing material layer can be increased.

The method for manufacturing a honeycomb structured body according to Claim 16 further includes bonding a plurality of the honeycomb fired bodies with the adhesive layer interposed therebetween to construct the ceramic block. By including the bonding, it is possible to manufacture an aggregated honeycomb structured body formed of a plurality of the honeycomb fired bodies which are aggregated with each other.

In the method for manufacturing a honeycomb structured body according to Claim 17, the inorganic compound is at least one member selected from the group consisting of alkali metal compounds and alkaline earth metal compounds. Use of the aforementioned compound enables the inorganic fibers to function specifically as biosoluble fibers. As a result, it becomes possible to enhance the safety for human body of the sealing material for a honeycomb structured body and the honeycomb structured body using the sealing material for a honeycomb structured body.

In the method for manufacturing a honeycomb structured body according to Claim 18, the ion adsorbent is at least one member selected from the group consisting of silica adsorbents, alumina adsorbents, zeolite adsorbents, clay adsorbents, mesoporous adsorbents, polyvalent metal salts, and activated carbon. The ion adsorbents have high ion adsorption properties and are chemically stable, and thus the durability period for use of the sealing material for a honeycomb structured body can be prolonged. Therefore, it is possible to prevent decrease in processability due to gelation of the sealing material, strength reduction due to uneven application of the sealing material or the like.

In the method for manufacturing a honeycomb structured body according to Claim 19, the ion adsorbent is a clay adsorbent. Since a clay adsorbent has high ion adsorption properties and high chemical stability, it is favorably used as the ion adsorbent in the method for manufacturing a honeycomb structured body according to the present invention.

In the method for manufacturing a honeycomb structured body according to Claim 20, the clay adsorbent is at least one member selected from the group consisting of bentonite, activated white clay, and montmorillonite. Those clay adsorbents are easily obtainable and excellent in ion adsorption properties, and therefore they are suitable as the ion adsorbent to be used in the method for manufacturing a honeycomb structured body of the present invention. Moreover, since bentonite or the like itself has adhesion, it can function as inorganic binders. Therefore, use of the inorganic binder may be omitted in preparation of the sealing material for a honeycomb structured body.

In the method for manufacturing a honeycomb structured body according to Claim 21, the ion adsorbent is at least one of a zeolite adsorbent and activated carbon.

The aforementioned zeolite adsorbent and activated carbon are very easily obtainable and can be readily handled. Therefore, preparation for the manufacturing can be facilitated and processability during the manufacturing can be improved. Moreover, since the zeolite adsorbent and activated carbon have high ion adsorption properties and are chemically stable, they can prolong the durability period for use of the sealing material for a honeycomb structured body.

In the method for manufacturing a honeycomb structured body according to Claim 22, the zeolite adsorbent is at least one member selected from the group consisting of alminosilicate zeolite, metallosilicate zeolite, and aluminophosphate zeolite. Since the aforementioned adsorbents have high ion adsorption properties and are chemically stable, they can prolong the durability period for use of the sealing material for a honeycomb structured body. Moreover, those adsorbents can be readily handled and thus favorably used in a manufacturing process in which safety and efficiency are required.

In the method for manufacturing a sealing material for a honeycomb structured body according to Claim 23, the ion adsorbent is a polyvalent metal salt.

Use of a polyvalent metal salt, even in a small amount, provides a good effect for preventing gelation, can prolong the durability period for use of the sealing material for a honeycomb structured body, and can increase the strength of the solidified sealing material for a honeycomb structured body.

In the method for manufacturing a sealing material for a honeycomb structured body according to Claim 24, the polyvalent metal salt may be specifically at least one member selected from the group consisting of aluminum phosphate, iron phosphate, magnesium phosphate, and aluminum fluoride. Since the aforementioned polyvalent metal salts have a low solubility, elution of polyvalent metal ions is less likely to occur. Also, the polyvalent metal salts have high ion adsorption properties, can prolong the durability period for use of the sealing material for a honeycomb structured body, are easily obtainable, and are readily handled in processing.

In the method for manufacturing a honeycomb structured body according to Claim 25, the sealing material for a honeycomb structured body further includes an oxide sol. In accordance with the method for manufacturing the sealing material for a honeycomb structured body of Claim 25, even under conditions where gelation of conventional sealing materials easily occurs, especially under alkaline conditions, the sealing material for a honeycomb structured body can be prepared while preventing the gelation. Moreover, the strength of the solidified sealing material for a honeycomb structured body can be improved due to the oxide sol contained therein.

In the method for manufacturing a honeycomb structured body according to Claim 26, the adhesive layer is formed of a solidified adhesive, the adhesive being the sealing material for a honeycomb structured body according to any one of Claims 1 to 10.

It is possible for the sealing material for a honeycomb structured body according to any one of Claims 1 to 10 to prevent decrease in the flowability of the sealing material paste caused by increase in the viscosity even long after the preparation of the sealing material paste. Thus, processability in forming the adhesive layer can be improved. Moreover, the strength of the solidified adhesive layer can be increased.

BEST MODE FOR CARRYING OUT THE INVENTION

(First embodiment)

The following description will discuss the first embodiment of the sealing material for a honeycomb structured body, the honeycomb structured body, and the method for manufacturing the honeycomb structured body of the present invention with reference to drawings.

First, the sealing material for a honeycomb structured body according to the first embodiment of the present invention will be discussed below.

The sealing material for a honeycomb structured body of the present embodiment includes inorganic fibers containing a biosoluble inorganic compound; inorganic particles; and an ion adsorbent.

(Inorganic fibers containing biosoluble inorganic compound)

The inorganic fibers contained in the sealing material for a honeycomb structured body is at least one member selected from the group consisting of alkali metal compounds, and alkaline earth metal compounds.

Examples of the alkali metal compounds include oxides of Na, or K, and examples of the alkaline earth metal compounds include oxides of Mg, Ca, or Ba.

In order to evaluate the biosolubility of the inorganic fibers containing an inorganic compound, the solubility of the inorganic compound contained in the inorganic fibers in physiological saline can be measured by the following method. The inorganic fibers in an amount of 0.5 g are added in 25 ml of physiological saline. The resulting product is shaken for five hours at a temperature of 37°C and then filtrated to remove solid content of the inorganic fibers. The extracted solution in which a portion of the inorganic fibers is dissolved is analyzed by atomic absorption spectrometry to measure the elements in the inorganic fibers such as silicon, sodium, calcium, and magnesium in the extracted solution. The physiological saline may be a commonly used one. When the total amount of the target compounds dissolved in the extracted solution is 100 ppm (0.01% by weight) or more, the inorganic fibers are referred as inorganic fibers including biosoluble inorganic compounds. The ratio of the eluted material having been eluted from the inorganic fibers can be calculated based on the result of the measurement. In the case where the physiological saline originally contains the element to be measured, the amount of the element in the physiological saline is previously confirmed so that the amount is subtracted from the measured amount of the element in the sample.

It is desirable that the solubility of the inorganic fibers contained in the sealing material for a honeycomb structured body of the present embodiment in physiological saline at 37°C is 300 ppm (0.03% by weight) or more. The inorganic fibers having a solubility of 300 ppm (0.03% by weight) or more is immediately dissolved under physiological conditions, making it possible to further reduce risks caused upon taking of the inorganic fibers in a human body.

Moreover, the lower limit of the average fiber length of the aforementioned inorganic fibers is preferably 0.1 $\mu$m, and the upper limit of the average fiber length of the aforementioned inorganic fibers is preferably 1000 $\mu$m, more preferably 100 $\mu$m, and still more preferably 50 $\mu$m.

The average fiber length of less than 0.1 $\mu$m may make it difficult to form an elastic honeycomb structured body. The average fiber length of more than 1000 $\mu$m tends to make the inorganic fibers form a pill-like shape. As a result, it may become difficult to reduce the thickness of the adhesive layer or the peripheral sealing material layer. Moreover, when the average fiber length is more than 1000 $\mu$m, the dispersibility of the inorganic particles may be deteriorated.

The inorganic fibers preferably have a large aspect ratio (major axis/minor axis). The inorganic fibers with a large aspect ratio are especially effective for improving the elasticity of the sealing materials.

The aspect ratio of the inorganic fibers included in the sealing material for a honeycomb structured body of the present embodiment is preferably 2 to 1000, more preferably 5 to 800, and further more preferably 10 to 500. When the aspect ratio of the inorganic fibers is less than 2, the inorganic fibers may not contribute to improving the elasticity of the sealing material. When the aspect ratio of the inorganic fibers is more than 1000, the strength of the solidified sealing material such as the bonding strength to bond the honeycomb fired bodies may be reduced. In the case where there is a distribution in the aspect ratio, the aspect ratio is expressed as an average value.

The inorganic fibers preferably contain silica in an amount of 60% to 85% by weight, or more preferably 70% to 80% by weight. The silica refers to SiO or $SiO_2$. The silica content of less than 60% by weight may reduce the strength of the inorganic fibers. The silica content exceeding 85% by weight may cause a reduction in the biosolubility due to the reduced amount of the inorganic compound in the inorganic fibers.

The inorganic fibers contain at least one of biosoluble alkali metal compounds or biosoluble alkaline earth metal compounds, and preferably further contain $SiO_2$ in an amount of 70% by weight or more. Generally, many of alkali metal silicates and alkaline earth metal silicates are biosoluble. However, the $SiO_2$ content of more than 85% by weight is not preferable as the amount of the biosoluble alkali metal compound or the biosoluble alkaline earth metal compound becomes too small.

Moreover, the $Al_2O_3$ content in the inorganic fibers is preferably 2% by weight or less. The $Al_2O_3$ content may be 0% by weight as long as the content is 2% by weight or less, on the ground that generally an alkali metal aluminate or an alkali metal aluminosilicate and an alkaline earth metal aluminate or an alkaline earth metal aluminosilicate have no or little biosolubility.

The inorganic compound in the inorganic fibers contained in the sealing material for a honeycomb structured body of the present embodiment is at least one member selected from the group consisting of alkali metal compounds and alkaline earth metal compounds.

Examples of the alkali metal compounds include sodium oxides or salts, and potassium oxides or salts. Examples of the alkaline earth metal compounds include magnesium oxides or salts, calcium oxides or salts, and barium oxides or salts. Biosoluble fibers can be obtained by allowing the materials of inorganic fibers such as silica, alumina, silica alumina, or glass to contain sodium oxides or salts, potassium oxides or salts, magnesium oxides or salts, calcium oxides or salts, or barium oxides or salts.

The inorganic compound in the inorganic fibers may be a boron compound or may contain a boron compound. Examples of the boron compound include boron oxides or salts.

(Inorganic particles)

The lower limit of the average particle diameter of the inorganic particles contained in the sealing material for a honeycomb structured body is preferably 0.01 $\mu$m, and more preferably 0.1 $\mu$m. The upper limit of the average particle diameter of the inorganic particles is preferably 100 $\mu$m, more preferably 15 $\mu$m, and further more preferably 10 $\mu$m. The average particle diameter of the inorganic particles of less than 0.01 $\mu$m may make it difficult to manufacture the inorganic particles and also may increase the cost. On the other hand, the average particle diameter of the inorganic particles of more than 100 $\mu$m may induce a reduction in the strength of the solidified sealing material such as the bonding strength or the thermal conductivity of the solidified sealing material. The inorganic particles used herein refer to inorganic particles having an aspect ratio of less than 2.

Examples of the inorganic particles include carbides, nitrides and the like, and specific examples thereof include inorganic powders or whiskers made of silicon carbide, silicon nitride, boron nitride and the like. Each of these may be used alone, or two or more kinds of these may be used in combination. Silicon carbide particles, which are superior in thermal conductivity, are more preferably used among the inorganic particles.

In this description, whiskers are included in the inorganic particles.

(Ion adsorbent)

The ion adsorbent contained in the sealing material for a honeycomb structured body is not particularly limited as long as the ion adsorbent is a substance with fine pores having absorption properties for absorbing absorbates (specifically metal cations). Examples of the adsorbents usable in the present invention include inorganic adsorbents, carbon adsorbents and the like.

The inorganic adsorbent is not particularly limited, and examples thereof include silica adsorbents, alumina adsorbents, zeolite adsorbents, clay adsorbents, mesoporous adsorbents, polyvalent metal salts, activated carbon, apatite adsorbents, layered zirconium phosphate, heteropoly acids, porous metal oxides, porous metal hydroxides and the like.

The silica adsorbent is not particularly limited, and examples thereof include silica gel, aero gel, colloidal silica, porous silicate glass and the like. The silica absorbent may be used alone, or two or more kinds of these may be used in combination.

Examples of the alumina adsorbent preferably include activated alumina such as $\alpha$-alumina, $\gamma$-alumina, $\delta$-alumina, $\theta$-alumina and the like. Each of these may be used alone, or two or more kinds of these may be used in combination.

The zeolite adsorbent may be any of, or a combination of natural zeolites, synthetic zeolites, or artificial zeolites as long as it can adsorb cations. A preferable example among the above zeolites is at least one kind of zeolites selected from the group consisting of aluminosilicate zeolite, metallosilicate zeolite, and aluminophosphate zeolite. This is because the above preferable zeolites have high ion adsorption properties, are easily obtainable, and are readily handled in processing among zeolite adsorbents.

Examples of the clay adsorbent include bentonite, smectite, smectite clay, activated white clay, montmorillonite and the like. Another examples of the clay adsorbent include kaolinite, acid clay, halloysite, sericite, mica clay minerals and the like. Each of these clay adsorbents may be used alone, or two or more kinds thereof may be used in combination.

Examples of the mesoporous adsorbent include mesoporous silica, mesoporous silica-alumina, mesoporous titania, mesoporous zirconia and the like, although not limited thereto. Each of these mesoporous adsorbents may be used alone, or two or more kinds thereof may be used in combination.

Examples of the polyvalent metal salts include aluminum phosphate, iron phosphate, magnesium phosphate, aluminum fluoride and the like, although not limited thereto. Each of these polyvalent metal salts may be used alone, or two or more kinds thereof may be used in combination. The polyvalent metal salts having a low solubility may be preferably used. This is because, since the polyvalent metal salts are for adsorbing dissolved alkali metals and the like, the amount of the metal ions dissolved from the polyvalent metal salts is preferably low. The polyvalent metal salts are preferably in shape of particles. This is because the polyvalent metal salts in fiber-like shape may cause a negative influence on human body.

Examples of the apatite adsorbent include hydroxy apatite or the like.

Examples of the heteropoly acid include tungstophosphate salt or the like. Examples of the porous metal oxide include $\alpha$-type tin oxide, $\beta$-type tin oxide and the like. Examples of the porous metal hydroxide include aluminium oxyhydroxide, iron oxyhydroxide, chrome oxyhydroxide, cobalt oxyhydroxide, nickel oxyhydroxide and the like, although not limited thereto. Each of these heteropoly acids or porous metal oxides may be used alone, or two or more kinds thereof may be used in combination.

Preferable among the aforementioned inorganic ion adsorbents is at least one kind of adsorbents selected from the group consisting of clay adsorbents, silica adsorbents, alumina adsorbents, zeolite adsorbents, polygonal metal salts, and mesoporous adsorbents. Those adsorbents are chemically stable as an inorganic adsorbents and are easily obtainable. Moreover, the inorganic ion adsorbents are more preferably clay adsorbents or zeolite adsorbents. This is because those adsorbents are excellent in cation adsorption properties and can prevent gelation of the sealing material for a honeycomb structured body for a long period of time.

The carbon adsorbent is not particularly limited, and activated carbon or the like can be preferably used. This is because activated carbon is excellent in cation adsorption properties and advantageously hardly causes interaction with other components.

The sealing material for a honeycomb structured body according to the present embodiment basically includes the aforementioned inorganic fibers, the inorganic particles, and the ion adsorbent. However, for preparing a flowable sealing material for a honeycomb structured body, an optimum amount of solvent such as water needs to be added. Furthermore, it is preferable to add an oxide sol, an organic binder, a water retention agent, or other additives, if necessary.

The lower limit of the amount of the inorganic fibers contained in the sealing material for a honeycomb structured body of the present embodiment is preferably 10% by weight and more preferably 20% by weight as a solid content. The upper limit of the amount of the inorganic fibers is preferably 70% by weight, more preferably 40% by weight, and further more preferably 30% by weight as a solid content. The inorganic fiber content of less than 10% by weight as a solid content may cause a reduction in the elasticity of the solidified sealing material for a honeycomb structured body.

On the other hand, the inorganic fiber content of more than 70% by weight as a solid content may cause a reduction in the thermal conductivity of the solidified sealing material for a honeycomb structured body and also may reduce the strength such as the bonding strength of the solidified sealing material for a honeycomb structured body.

The lower limit of the amount of the inorganic particles contained in the sealing material for a honeycomb structured body of the present embodiment is preferably 3% by weight, more preferably 10% by weight, and further more preferably 20% by weight. The upper limit of the amount of the inorganic particles is preferably 80% by weight, more preferably 60% by weight, and further more preferably 40% by weight. The inorganic particle content of less than 3% by weight may cause a reduction in the thermal conductivity of the solidified sealing material for a honeycomb structured body. The inorganic particle content of more than 80% by weight may cause a reduction in the bonding strength when the solidified sealing material for a honeycomb structured body (adhesive layer or peripheral sealing material layer) is exposed to high temperatures.

The amount of the ion adsorbent in the sealing material for a honeycomb structured body according to the present embodiment is not particularly limited as long as the gelation preventive effect of the sealing material for a honeycomb structured body is obtained. The ion adsorbent content is preferably 0.1% by weight or more, more preferably 0.2% by weight or more, and further more preferably 0.4% by weight or more. The ion adsorbent content of less than 0.1% by weight in the sealing material for a honeycomb structured body may lead to insufficient absorption amount or absorption rate of the polyvalent metal ions eluted from the inorganic fibers. As a result, gelation of the sealing material for a honeycomb structured body may occur within 24 hours of preparation.

The upper limit of the ion adsorbent content is not particularly limited. The ion adsorbent content is preferably 5.0% by weight or less, and more preferably 2.0% by weight or less. As the amount of the ion adsorbent is increased, the amount of the components other than the ion adsorbent, especially the inorganic fibers in the sealing material for a honeycomb structured body is decreased. As a result, the strength or the elasticity of the solidified sealing material for a honeycomb structured body is reduced. Taking the above into consideration, the ion adsorbent content in the sealing material for a honeycomb structured body may be determined to the extent that the reduction in the strength or the elasticity of the solidified sealing material for a honeycomb structured body does not substantially have an effect on the practical use.

When bentonite is used as the ion adsorbent, the content thereof is preferably 0.1 to 5.0% by weight, more preferably 0.2 to 5.0% by weight, and further more preferably 0.2 to 2.0% by weight. When zeolite is used as the ion adsorbent, the content thereof is preferably 0.1 to 5.0% by weight, more preferably 0.2 to 5.0% by weight, and further more preferably 0.2 to 2.0% by weight. The amount of bentonite or zeolite of 0.2% by weight or more as the ion adsorbent leads to excellent strength of the solidified sealing material for a honeycomb structured body. When aluminum phosphate is used as the ion adsorbent, the content thereof is preferably 0.1 to 2.0% by weight, more preferably 0.1 to 0.5% by weight, and further more preferably 0.2 to 0.5% by weight. Moreover, the content of aluminum phosphate is further more preferably 0.10 to 0.25% by weight, and particularly preferably 0.20 to 0.25% by weight. The amount of aluminum phosphate of 0.1% by weight or more as the ion adsorbent prevents gelation of the sealing material for a honeycomb structured body, leading to excellent strength of the solidified sealing material for a honeycomb structured body. When aluminum phosphate is used as the ion adsorbent, the strength tends to significantly increase as the amount of the aluminum phosphate is increased. Bentonite, zeolite, and aluminum phosphate are easily available among the ion adsorbents. Further, a honeycomb structured body in which any of bentonite, zeolite, or aluminum phosphate is used may not cause a reliability problem.

The weight ratio of the ion adsorbent to the inorganic fibers (weight of inorganic fibers/weight of ion adsorbent) in the sealing material for a honeycomb structured body according to the present embodiment is not particularly limited, and may be 100/1 to 4/1, and preferably 80/1 to 8/1. When the weight ratio of the ion adsorbent to the inorganic fibers goes beyond the range of 100/1 to 4/1, the amount of the ion adsorbent present in the sealing material for a honeycomb structured body may become low, leading to insufficient absorption of the polyvalent ions, or the amount of the inorganic fibers present in the sealing material for a honeycomb structured body may become low, leading to insufficient strength or elasticity of the solidified sealing material for a honeycomb structured body.

(Oxide sol)

As mentioned earlier, an oxide sol may be added in the sealing material for a honeycomb structured body according to the present embodiment.
Examples of the oxide sol include silica sol, alumina sol, zirconia sol and the like. Each of these may be used alone, or two or more kinds of these may be used in combination. The oxide sol functions as a binder to bond the particles with each other after solidifying the sealing material. Taking those functions and processability into consideration, the oxide sol may be preferably silica sol or alumina sol. The oxide sol may be acidic or alkaline.

The lower limit of the amount of the oxide sol contained in the sealing material for a honeycomb structured body is preferably 1% by weight, and more preferably 5% by weight as a solid content. The upper limit thereof is preferably 30% by weight, more preferably 15% by weight, and further more preferably 9% by weight as a solid content. The amount of the oxide sol of less than 1% by weight as a solid content may cause a reduction in the strength such as the bonding strength of the solidified sealing material for a honeycomb structured body. The amount of the oxide sol exceeding 30% by weight as a solid content may cause a reduction in the thermal conductivity of the solidified sealing material for a honeycomb structured body.

The average particle diameter of the oxide included in the oxide sol is preferably 5 to 30 nm.

The smaller the average particle diameter of the oxide contained in the oxide sol is, the more the strength such as the bonding strength to bond the honeycomb fired bodies tends to improve. However, when the average particle diameter of the oxide is less than 5 nm, the dispersibility of the oxide in the sealing material tends to be deteriorated. Further, the oxide having the average particle diameter of less than 5 nm is difficult to manufacture and thus the oxide sol is hardly available. When the average particle diameter of the oxide exceeds 30 nm, the bonding strength between the sealing material for a honeycomb structured body and the honeycomb fired bodies tend to be decreased.

In this description, the average particle diameter of the oxide contained in the oxide sol is the value measured, for example, by using the following method.

Specifically, when the oxide sol is a silica sol, first, the silica sol is dried, and its BET specific surface area is measured. Thereafter, supposing that silica particles in the silica sol are spherical particles of a dense body, the particle diameter is calculated from the following formula (1):

$$\mathtt{BET\ specific\ surface\ area\ =\ (6000/\rho)/particle\ diameter\ ...(1)}$$

(in the formula, "$\rho$" is the true density of silica (2.2 g/cm$^3$))

(pH value of sealing material for a honeycomb structured body)

When the sealing material for a honeycomb structured body according to the present embodiment contains the oxide sol, the sealing material for a honeycomb structured body may be alkaline. Even under alkaline conditions where conventionally gelation tends to occur in sealing materials for a honeycomb structured body, gelation can be prevented from occurring or start of gelation can be delayed in the sealing material for a honeycomb structured body according to the present embodiment due to the ion adsorbent contained therein. Moreover, due to the oxide sol contained as well in the sealing material for a honeycomb structured body, the strength of the solidified sealing material for a honeycomb structured body can be improved.

When an alkaline sealing material for a honeycomb structured body is used, the sealing material may have a pH value of 7 to 11, and preferably 8 to 10.

The sealing material for a honeycomb structured body may be acidic as long as its practical use is not substantially affected in consideration of prevention of gelation or strength after solidification of the sealing material for a honeycomb structured body. The acidic sealing material for a honeycomb structured body may have a pH value of 3 to 7, and preferably 4 to 6.

The sealing material for a honeycomb structured body according to the present embodiment mainly includes the inorganic fibers, the inorganic particles and the ion adsorbent mentioned earlier, and further optionally includes the oxide sol. In order to allow the sealing material for a honeycomb structured body to have flowability, an optimum amount of solvent such as water needs to be added. Furthermore, it is preferable to add an organic binder, a water retention agent, or other additives, if necessary.

Since the organic binder provides the honeycomb fired bodies or the like with adhesive properties and also bonds the materials with each other upon forming a sealing material layer for a honeycomb structured body, the organic binder is preferably included in the sealing material for a honeycomb structured body.

Examples of the organic binder include polyvinyl alcohol, methylcellulose, ethylcellulose, carboxylmethylcellulose and the like. Each of these may be used alone, or two or more kinds thereof may be used in combination. Carboxymethylcellulose is preferably used among the aforementioned organic binders.

The organic binder content in the sealing material for a honeycomb structured body according to the present embodiment is preferably 0.1 to 1. 0% by weight. The organic binder content of less than 0.1% by weight may fail to properly bond the materials with each other, leading to reduction in the strength of the solidified sealing material for a honeycomb structured body. The organic binder content of more than 1.0% by weight may excessively increase the viscosity of the sealing material for a honeycomb structured body, making it difficult to apply the sealing material. Furthermore, after the honeycomb structure body is mounted in an exhaust gas purifying apparatus, the sealing material layer may be decomposed and produce a large volume of hydrocarbon gases upon contacting with exhaust gases.

The water retention agent used herein refers to a substance which absorbs moisture upon contacting thereto so as to prevent the moisture from shifting to other parts. Therefore, addition of the water retention agent can prevent the reduction in the flowability of the sealing material paste for a honeycomb structured body.

The water retention agent content in the sealing material for a honeycomb structured body according to the present embodiment is preferably 0.1 to 1.0% by weight. The water retention agent content of less than 0.1% by weight leads to excessively high viscosity of the sealing material paste for a honeycomb structured body due to absorption of water by the inorganic fibers, inorganic particles and other components, making the application difficult. The water retention agent content of more than 1.0% by weigh may excessively increase the amount of the water retention agent. As a result, the viscosity of the sealing material paste for a honeycomb structured body becomes too high, and thus the flowability thereof is hardly maintained.

Examples of the water retention agent include polyvinyl alcohol, polyacrylamides, cellulose derivatives, polysaccharides and the like.

As the solvent, water may be exemplified. Further, alcohol and the like may be added.

The amount of the solvent to be added is not particularly limited. In the case of water, the water content in the sealing material for a honeycomb structured body is preferably 20 to 50% by weight. The water content of less than 20% by weight fails to maintain the flowability of the sealing material for a honeycomb structured body. The water content of more than 50% by weight excessively reduces the viscosity of the sealing material paste for a honeycomb structured body, making the application difficult.

The following description will discuss the method for preparing the sealing material for a honeycomb structured body according to the present embodiment.

The sealing material for a honeycomb structured body can be prepared by first mixing the inorganic fibers, the inorganic particles, the ion adsorbent, and optionally the oxide sol at the aforementioned proportion to prepare a mixture, followed by addition of the optimal amount of water, the organic binder, and the water retention agent and the like, if necessary, and then mixing the resulting mixture. The pH value of the prepared sealing material for a honeycomb structured body is not particularly limited, and is preferably 4 to 7.

The pH value may be adjusted by adding an acidic solution or by adding an alkaline hydroxide and the like. Kinds of the acidic solution are not particular limited, and examples thereof include a water solution of hydrochloric acid, sulfric acid, nitric acid, phosphoric acid, lactic acid, acetic acid, formic acid and the like. A water solution of lactic acid is especially preferable among the above acidic solutions.

The prepared sealing material for a honeycomb structured body contains well-biosoluble inorganic fibers, has good applicability to the ceramic block and the like even long after the preparation of the sealing material paste for a honeycomb structured body, and can prevent strength reduction of the solidified sealing material for a honeycomb structured body. Moreover, since an ion adsorbent is contained, it is possible to provide the sealing material (adhesive layer or peripheral coating material layer) for a honeycomb structured body having a larger strength after being solidified.

The following description will discuss a honeycomb structured body according to the first embodiment of the present invention.

The honeycomb structured body of the present embodiment is manufactured by using the aforementioned sealing material for a honeycomb structured body of the present embodiment.

Fig. 1 is a perspective view that schematically shows one example of a honeycomb structured body of the present invention.

Fig. 2 (a) is a perspective view that schematically shows one example of a honeycomb fired body that constitutes the honeycomb structured body of the present invention, and Fig. 2 (b) is an A-A line cross-sectional view of the honeycomb fired body shown in Fig. 2(a).

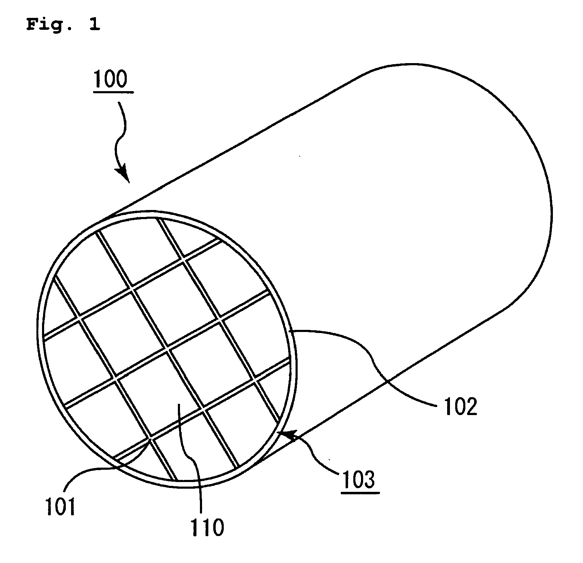

A honeycomb structured body 100 shown in Fig. 1 has a structure in which a plurality of porous silicon carbide honeycomb fired bodies 110 are bonded with one another with an adhesive layer 101 interposed therebetween to construct a ceramic block 103, with a peripheral sealing material layer 102 formed on the periphery face of the ceramic block 103.

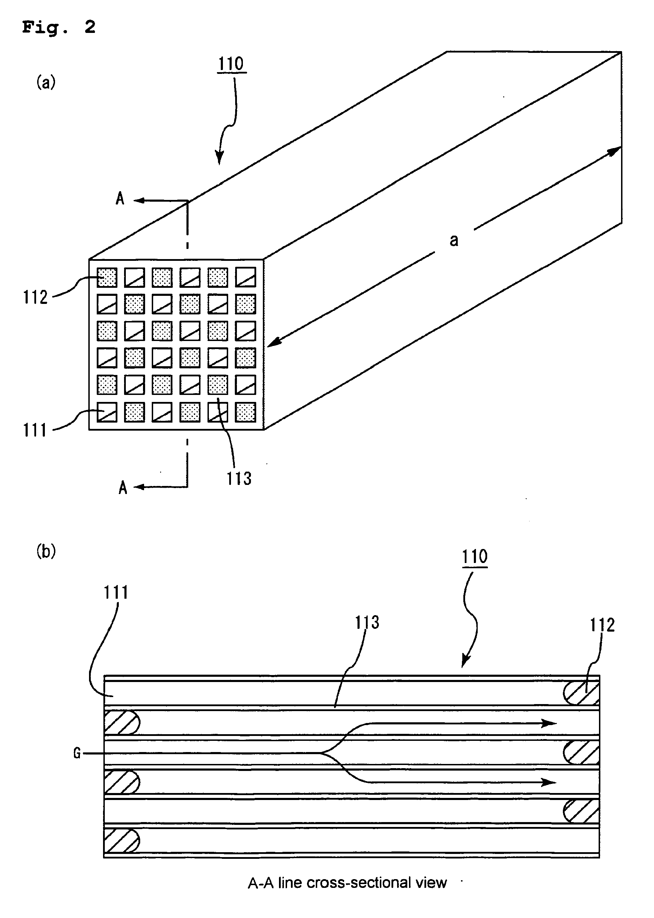

The honeycomb fired body 110 has a shape shown in Figs. 2 (a) and 2(b).

The honeycomb fired body 110 shown in Figs. 2 (a) and 2 (b) has a structure in which a large number of cells (through holes) 111 are longitudinally (the direction "a" in Fig. 2 (a)) placed in parallel with one another with a cell wall (partition wall) 113 therebetween, and either one end of each of the cells 111 is plugged with a plug 112. Therefore, exhaust gases "G" having flowed into one of the cells 111 with an opening end on one end face surely passes through the cell wall 113 that separates the cells 111, and flows out from another cell 111 with an opening end on the another end face.

Therefore, the cell wall 113 functions as a filter for capturing PM and the like.

In the honeycomb structured body of the present embodiment, the adhesive layer and the peripheral sealing material layer are formed by using the sealing material for a honeycomb structured body of the present embodiment.

The following description will discuss embodiments of the method for manufacturing a honeycomb structured body using the sealing material for a honeycomb structured body according to the first embodiment.

First, molding for manufacturing a honeycomb molded body is performed by extrusion-molding a wet mixture containing ceramic powders and a binder.

Specifically, as the ceramic powders, silicon carbide powders having different average particle diameters, an organic binder, a plasticizer in liquid form, a lubricant and water are mixed to prepare a wet mixture for manufacturing a honeycomb molded body.

Successively, this wet mixture is loaded into an extrusion molding machine and extrusion-molded so that a honeycomb molded body having a predetermined shape is manufactured.

Next, the honeycomb molded body is cut into a predetermined length, and dried by using a drying apparatus, such as a microwave drying apparatus, a hot-air drying apparatus, a dielectric drying apparatus, a reduced-pressure drying apparatus, a vacuum drying apparatus, and a freeze drying apparatus. Thereafter, plugging is carried out by filling predetermined cells with a plug material paste to be a plug for plugging the cells.

Next, degreasing is carried out to remove the organic components in the honeycomb molded body by heating the honeycomb molded body in a degreasing furnace. The degreased honeycomb molded body is transferred to a firing furnace to carry out firing so that a honeycomb fired body is manufactured.

Here, conditions conventionally used upon manufacturing a honeycomb fired body are applicable for carrying out the cutting, drying, plugging, degreasing and firing.

Next, bonding is carried out by forming the adhesive layer between a plurality of the honeycomb fired bodies so that the plurality of the honeycomb fired bodies are bonded with one another with the adhesive layer interposed therebetween according to the following method.

A paste-like adhesive which is the sealing material for a honeycomb structured body of the present embodiment is applied on a predetermined side surface of each of the honeycomb fired bodies in which a predetermined end of each of the cells is plugged so as to form an adhesive paste layer. On the adhesive paste layer is placed one of the other honeycomb fired bodies, and this process is sequentially repeated so that a honeycomb aggregated body in which the plurality of the honeycomb fired bodies are bonded with one another with the adhesive paste layer interposed therebetween is manufactured.

Next, the adhesive paste layer is solidified by heating the honeycomb aggregated body so that a ceramic block having an adhesive layer is constructed.

Thereafter, periphery cutting is performed by cutting side surfaces of the ceramic block using a diamond cutter or the like so that the ceramic block has a round pillar shape.

Further, forming a peripheral sealing material layer on the peripheral surface of the ceramic block is carried out according to the following method.

A peripheral sealing material paste layer is formed by applying the sealing material for a honeycomb structured body of the present embodiment using a squeeze. By solidifying the peripheral sealing material paste layer, a peripheral sealing material layer is formed.

The sealing material for a honeycomb structured body according to the present invention may be used as a material for forming the peripheral sealing material layer.

According to the processes mentioned earlier, a honeycomb structured body including the sealing material for a honeycomb structured body (adhesive layer and peripheral sealing material layer) of the present embodiment can be manufactured.

As in this case, the honeycomb structured body of the present embodiment may be an aggregated honeycomb structured body in which the ceramic block includes a plurality of the honeycomb fired bodies. The honeycomb structured body of the present embodiment may be an integrated honeycomb structured body in which the ceramic block is formed of a single honeycomb fired body as well.

The effects of the sealing material for a honeycomb structured body, the honeycomb structured body, and the method for manufacturing a honeycomb structured body according to the present embodiment will be recited below.

(1) The inorganic fibers contained in the sealing material for a honeycomb structured body of the present embodiment are biosoluble fibers. Therefore, even if the inorganic fibers are taken into human body, as they are soluble under physiological conditions, it is possible to secure the safety for human body of the sealing material for a honeycomb structured body containing the inorganic fibers.

Moreover, the honeycomb structured body manufactured by using the sealing material for a honeycomb structured body of the present embodiment is highly safe for human body and can be safely handled by users such as operators and consumers.

Further, operators can safely work in the manufacture of a honeycomb structured body by using the sealing material for a honeycomb structured body of the present embodiment.

(2) Since the sealing material for a honeycomb structured body of the present embodiment contains the ion adsorbent, it can adsorb polyvalent metal ions such as $Ca^{2+}$ and $Mg^{2+}$ eluted from the biosoluble fibers. Therefore, the polyvalent metal ion concentration in the sealing material for a honeycomb structured body is reduced and thus the polyvalent metal ions less frequently diffuse and come into contact with the inorganic particles and/or the oxide sol. As a result, aggregation, association or the like due to changes in the surface charge among the inorganic particles, among the inorganic particles and the oxide sol, or among the oxide sol is suppressed, which may prevent gelation of the sealing material for a honeycomb structured body. Accordingly, the sealing material for a honeycomb structured body may not form a gel even long after the preparation of the sealing material paste, and has a good applicability to the ceramic block or the like.

When forming the peripheral sealing material layer of the honeycomb structured body by using the sealing material for a honeycomb structured body of the present embodiment, gelation of the sealing material for a honeycomb structured body does not occur, and thus it is possible to prevent uneven thickness of the peripheral sealing material layer due to difficulty in evenly applying the sealing material paste for a honeycomb structured body. Accordingly, it is possible to prevent variation or reduction in the strength of the peripheral sealing material layer caused by uneven thickness of the peripheral sealing material layer.

(3) The sealing material for a honeycomb structured body according to the present embodiment may contain an ion adsorbent such as a zeolite adsorbent, a clay adsorbent, polyvalent metal ions and the like in addition to the inorganic fibers and the inorganic particles. The ion adsorbents mentioned earlier have excellent mechanical properties needed to maintain the strength of the solidified sealing material for a honeycomb structured body. Therefore, reduction in the strength of the solidified sealing material for a honeycomb structured body can be prevented, and thus it is possible to form the sealing material (adhesive layer or peripheral coating material layer) having improved mechanical properties.

(4) The honeycomb structured body according to the present embodiment is an aggregated honeycomb structured body including a plurality of the honeycomb fired bodies.

In the honeycomb structured body in which a plurality of the honeycomb fired bodies are aggregated, an adhesive layer is necessary between the honeycomb fired bodies. Therefore, the total amount of the inorganic fibers contained in the honeycomb structured body is inevitably increased. Even in this case, since the sealing material for a honeycomb structured body of the present embodiment is used as an adhesive in the honeycomb structured body of the present embodiment, it is possible to secure the safety of the honeycomb structured body for human body.

(5) In the honeycomb structured body of the present embodiment, the peripheral sealing material layer is formed by solidifying the sealing material for a honeycomb structured body of the present embodiment. Since the sealing material for a honeycomb structured body of the present embodiment shows no decrease in the strength of the solidified sealing material for a honeycomb structured body, damages such as cracks can be prevented from occurring in the peripheral sealing material layer.

(6) In the honeycomb structured body of the present embodiment, the adhesive layer is formed by solidifying the sealing material for a honeycomb structured body of the present embodiment. Since the sealing material for a honeycomb structured body of the present embodiment shows no decrease in the strength of the solidified sealing material for a honeycomb structured body, it is possible to prevent sliding or coming off of the honeycomb fired bodies which are bonded with one another with the adhesive layer interposed therebetween in the case where the honeycomb structured body including the honeycomb fired bodies is used as a exhaust gas purifying apparatus. Therefore, the honeycomb structured body can be stably used for a long period of time.

(7) In the method for manufacturing a honeycomb structured body of the present embodiment, when forming a peripheral sealing material layer, the sealing material for a honeycomb structured body of the present embodiment is applied on a peripheral surface of the ceramic block. Further, when forming the adhesive layer, the sealing material for a honeycomb structured body of the present embodiment is applied on a side surface of the honeycomb fired body. Since the sealing material for a honeycomb structured body of the present embodiment shows no decrease in the flowability of the sealing material paste caused by increase in the viscosity of the sealing material paste even long after the preparation of the sealing material paste, it is possible to prevent a reduction in the processability upon formation of the peripheral sealing material layer or the adhesive layer.

EXAMPLES

Examples which specifically disclose the first embodiment of the present invention will be described below. The present invention is not limited to those Examples.

(1) Preparation of sealing material for a honeycomb structured body

In each of the Examples and Comparative Examples, a sealing material for a honeycomb structured body was prepared using inorganic fibers "A" having the composition shown in Table 1 below.
Table 1

|  | Inorganic fibers A | Inorganic fibers B |
|---|---|---|
| $SiO_2$(wt%) | 70.8 | 74.8 |
| MgO(wt%) | 0.6 | 17.9 |
| CaO(wt%) | 25.9 | 4.4 |
| $Al_2O_3$(wt%) | 0.8 | 1.3 |
| Others | 1.9 | 1.6 |

(Example 1)

(Preparation of sealing material for a honeycomb structured body)

A sealing material for a honeycomb structured body having a pH value of 6.3 was prepared by mixing 438. 9 parts by weight of the biosoluble fiber containing inorganic fibers "A" as inorganic fibers, 367.5 parts by weight of SiC powders having an average particle diameter of 0. 5 μm as inorganic particles, 4.6 parts by weight of carboxymethyl cellulose (CMC) as an organic binder, 283. 6 parts by weight of a bentonite dispersion liquid (Trade name: W-200U, manufactured by Topy Industries Ltd.) containing 2% by weight of bentonite as an ion adsorbent, 22.7 parts by weight of polyvinyl alcohol (PVA) as a water retention agent, and 50.0 parts by weight of water, followed by kneading. The concentration of the bentonite in the sealing material for a honeycomb structured body was 0.5% by weight.

(Examples 2 to 5)

A sealing material for a honeycomb structured body was prepared in the same manner as that in Example 1, except that the bentonite content in the sealing material for a honeycomb structured body was changed to the blending amount shown in Table 2 below. Table 2 shows the pH value of the thus obtained sealing material for a honeycomb structured body of Examples 2 to 5.

(Examples 6 and 7)

In Example 6, a sealing material for a honeycomb structured body was prepared in the same manner as that in Example 1, except that an acidic silica sol (pH: 6.3, silica content: 30% by weight) was added to the sealing material for a honeycomb structured body at the blending amount shown in Table 2 below, and further 0.7 parts by weight of a lactic acid solution (lactate concentration: 50% by weight) as a pH adjusting agent was added. In Example 7, a sealing material for a honeycomb structured body was prepared in the same manner as that in Example 1, except that an alkaline silica sol (pH: 8.8, silica content: 30% by weight) was added at the blending amount shown in Table 2 below. The pH value of the resulting sealing material for a honeycomb structured body of Examples 6 and 7 is shown in Table 2.

(Examples 8 to 10)

A sealing material for a honeycomb structured body was prepared in the same manner as that in Example 1, except that, in place of bentonite, a solution containing montmorillonite or kaolinite in the blending amount shown in Table 2 was used. The pH value of the resulting sealing material for a honeycomb structured body of Examples 8 to 10 is shown in Table 2.

(Comparative Examples 1 and 2)

In Comparative Example 1, a sealing material for a honeycomb structured body was prepared in the same manner as that in Example 1, except that the ion adsorbent was not added and an acidic silica sol (pH: 6.3, silica content: 30% by weight) was added in the blending amount shown in Table 2 below and further 6.8 parts by weight of a lactic acid solution (lactate concentration: 50% by weight) as a pH adjusting agent was added. In Comparative Example 2, a sealing material for a honeycomb structured body was prepared in the same manner as that in Example 1, except that the ion adsorbent was not added, and alkaline silica sol (pH: 9.9, silica content: 30% by weight) was added at the blending amount shown in Table 2. Table 2 shows the pH values of the thus obtained sealing materials for a honeycomb structured body of Comparative Examples 1 and 2.

(Examples 11 to 15)

A sealing material for a honeycomb structured body was prepared in the same manner as that in Example 1, except that, in place of bentonite, a solution containing zeolite (A-type zeolite) in the blending amount shown in Table 3 was used. Table 3 shows the pH value of the resulting sealing material for a honeycomb structured body of Examples 11 to 15.

(Examples 16 to 18)

A sealing material for a honeycomb structured body was prepared in the same manner as that in Example 1, except that, in place of bentonite, a solution containing aluminum phosphate in the blending amount shown in Table 3 was used, and an alkaline silica sol (pH: 8.8, silica content: 30% by weight) was added at the blending amount shown in Table 3. Table 3 shows the pH value of the resulting sealing material for a honeycomb structured body of Examples 16 to 18.

(Example 19)

A sealing material for a honeycomb structured body was prepared in the same manner as that in Example 1, except that, in place of bentonite, a solution containing aluminum phosphate in the blending amount shown in Table 3 was used, and an acidic silica sol (pH: 6.3, silica content: 30% by weight) was added at the blending amount shown in Table 3. Table 3 shows the pH value of the resulting sealing material for a honeycomb structured body of Example 19.

(Example 20 and Comparative Example 3)

A sealing material for a honeycomb structured body was prepared in the same manner as that in Example 1, except that, in place of bentonite, a solution containing aluminum phosphate in the blending amount shown in Table 3 was used. The pH value of the resulting sealing material for a honeycomb structured body of Example 20 and Comparative Example 3 is shown in Table 3.

The sealing materials for a honeycomb structured body prepared in Examples and Comparative Examples were evaluated by the methods mentioned below.

(2) Evaluation of sealing material for a honeycomb structured body

(2-1) Flowability evaluation based on viscosity of sealing material for a honeycomb structured body

For each of the sealing materials for a honeycomb structured body prepared in Examples and Comparative Examples, flowability was measured with a B-type viscometer immediately after, one day after, two days after, three days after, and seven days after the preparation of the sealing materials (paste) for a honeycomb structured body. The rotation of the viscometer was 10 rpm, and the temperature was 25°C at the time of the measurement. Tables 2 and 3 show the results of the flowability evaluation based on viscosity of sealing material for a honeycomb structured body. In the case where the viscosity was already too high at the time of measurement to be measured, no data of the results are shown in the tables. The data "300 Pa·s" in the measurement results of the viscosity indicates that a measurement result of more than 300 Pa·s was obtained and thus the result was formally described as 300 Pa·s.

(2-2) Manufacture of sample for evaluation, and evaluation of mechanical properties of solidified sealing material for a honeycomb structured body based on breaking strength using the sample for evaluation

In order to evaluate the sealing material for a honeycomb structured body, honeycomb fired bodies were manufactured and a sample for evaluation was manufactured using the honeycomb fired bodies. Breaking strength of the sample for evaluation was evaluated.
Namely, two pieces of the honeycomb fired bodies were bonded using the sealing material for a honeycomb structured body, and cutting was performed on the bonded honeycomb fired bodies to manufacture a sample for evaluation. The sample was used for evaluations. Accordingly, first, manufacturing process of the sample for evaluation will be discussed, and thereafter evaluation methods will be explained below.

(Manufacturing of honeycomb fired body)

An amount of 52.8% by weight of silicon carbide coarse powders having an average particle diameter of 22 $\mu$m and an amount of 22.6% by weight of a silicon carbide fine powder having an average particle diameter of 0.5 $\mu$m were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a wet mixture. The obtained wet mixture was extrusion-molded, so that a raw honeycomb molded body having virtually the same shape as the shape shown in Fig. 2(a) and having cells not plugged was manufactured.

Next, the raw honeycomb molded body was dried by using a microwave drying apparatus to obtain a dried honeycomb molded body. Then, using a plug material paste having the same composition as that of the wet mixture, predetermined cells were filled, and the dried honeycomb molded body in which the plug material paste was filled was again dried by using a drying apparatus.

The dried honeycomb molded body was degreased at 400°C, and then fired at 2200°C under normal pressure argon atmosphere for three hours, so that a honeycomb fired body including a silicon carbide sintered body, with a porosity of 45%, an average pore diameter of 15 $\mu$m, a size of 34.3 mm x 34.3 mm x 150 mm, the number of cells (cell density) of 300 pcs/inch$^2$ and a thickness of the cell wall of 0.25 mm (10 mil), was manufactured.

(Manufacturing of samples for evaluation)

Next, samples for evaluation were manufactured according to the following method.

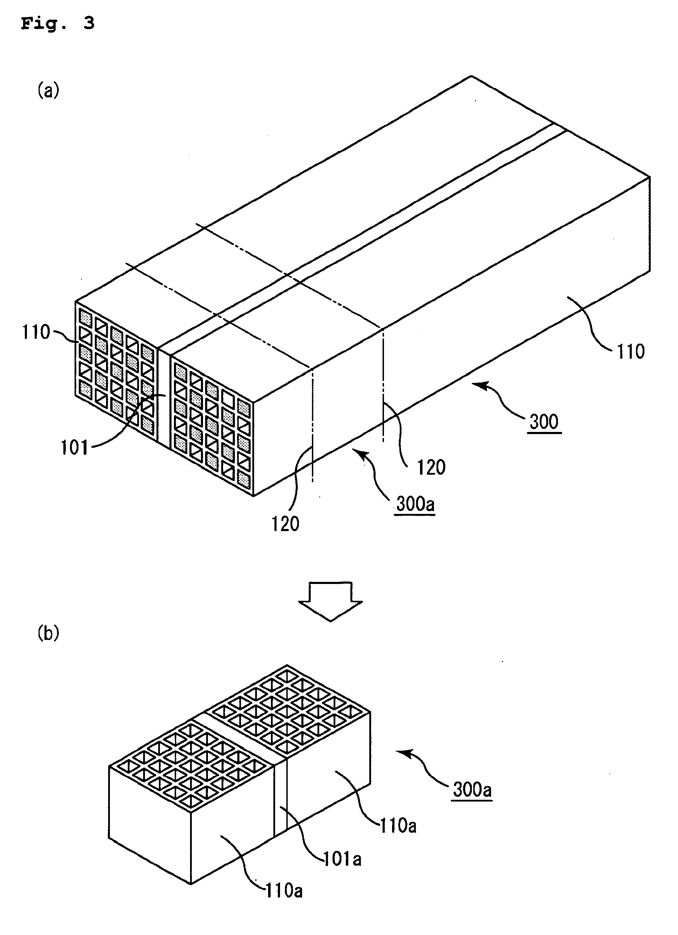

Fig. 3(a) is a perspective view that shows a method for bonding the honeycomb fired bodies, and Fig. 3(b) is a perspective view that shows a sample for evaluation prepared by cutting the bonded honeycomb fired bodies.

Each of total four cardboard spacers having a thickness of 1.0 mm was attached to each of the vicinities of the four corners of a side surface of one of honeycomb fired bodies 110. The spacer was attached to a position where the shortest distances from peripheral portions of the spacer to the two sides forming the corner of the side surface of the honeycomb fired body were both 4.5 mm.

Next, the sealing material for a honeycomb structured body prepared in Examples and Comparative Examples was applied on the side surface of the honeycomb fired body 110 to which the spacer was attached. Another honeycomb fired body 110 was then bonded to the first honeycomb fired body 110 with the spacer and the sealing material for a honeycomb structured body interposed therebetween. Thereafter the two honeycomb fired bodies 110 bonded with each other with the sealing material for a honeycomb structured body interposed therebetween were heated at 120°C to solidify the sealing material for a honeycomb structured body so that an adhesive layer 101 having a thickness of 1.0 mm was formed.

Accordingly, a bonded body 300 including the two honeycomb fired bodies 110 and the adhesive layer 101 was manufactured (see Fig. 3(a)).

Next, the bonded body 300 was cut with a cutting disk at the positions shown by the chain double-dashed lines 120 so that the two bonded honeycomb fired bodies 110 has a length in the longitudinal direction of 25.0 $\pm$ 1.0 mm. Accordingly, a sample for evaluation 300a including two pieces of honeycomb fired bodies 110a and an adhesive layer 101a obtained by the cutting was prepared (see Fig. 3(b)). The sample for evaluation 300a was prepared by cutting the bonded body 300 so that the sample for evaluation 300a did not include the spacer.

(Evaluation based on breaking strength)

Using the samples for evaluation 300a, breaking strength of the respective sealing materials for a honeycomb structured body (adhesive layer 101a) was measured according to the methods mentioned below. The obtained breaking strength served as the index of the bonding strength of the sealing materials for a honeycomb structured body.

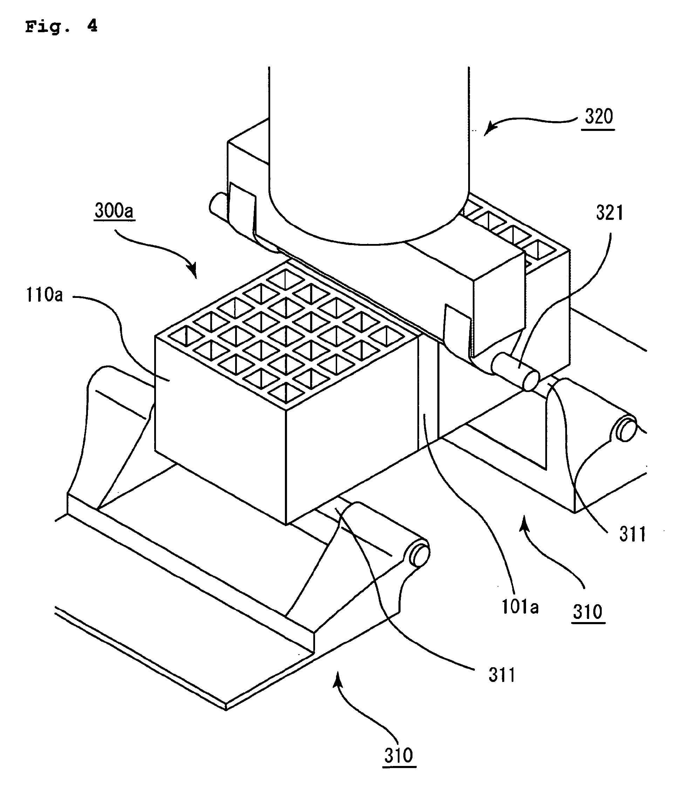

Fig. 4 is a perspective view that schematically shows a method for measuring the breaking strength of the sealing material for a honeycomb structured body (the adhesive layer 101a) in the sample for evaluation 300a.

A load was applied to a portion of the adhesive layer 101a formed between the two pieces of the honeycomb fired bodies 110a. The load at the time when the adhesive layer 101a was broken was set as the breaking strength. The breaking strength was measured with a bending tensile testing machine (Instron 5582) by a three-point bent test with reference to JIS R 1601.

As shown in Fig. 4, two lower jigs 310 each having a cylindrical sample supporting rod 311 were fixed to a fixed table of the Instron testing machine, with the sample supporting rods 311 each disposed at the upper side of the lower jig 310 and having a distance (span distance) of 56 mm between them.

The sample for evaluation 300a obtained in the foregoing process was placed to bridge the sample supporting rods 311 of the two lower jigs 310 in such a manner that the adhesive layer 101a in the sample for evaluation 300a was located in the middle between the center of the two supporting rods 311.

Next, position of the upper jig 320 was controlled so that a cylindrical sample contacting portion 321 of the upper jig 320, when it was lowered, was placed above the center portion of the adhesive layer 101a. Then, the upper jig 320 was lowered to allow the sample contacting portion 321 to contact with the surface of the adhesive layer 101a. The upper jig 320 was further lowered at a rate of 1.0 mm/min until breakage occurred in the adhesive layer 101a. The load at the time when the breakage occurs was set as the breaking strength (kgf).

Tables 2 and 3 show the results of the measurements of the breaking strength of the sealing material for a honeycomb structured body (the adhesive layer).

(Manufacturing of honeycomb structured body)

On a base having a V-shaped cross section, a honeycomb fired body was placed along the V-shaped cut surface. The sealing material for a honeycomb structured body according to Examples was applied on the honeycomb fired body on its side surface facing upward using a squeegee so that an adhesive paste layer was formed.

On the adhesive paste layer, each of total four spacers was placed on each of the vicinities of the four corners of the aforementioned side surface.

Specifically, each of spacers was placed at a position where the shortest distances from peripheral portions of the spacer to the two sides forming the corner of the side surface of the honeycomb fired body were both 4.5 mm.

Thereafter, other honeycomb fired body was placed on the adhesive paste layer and the spacers. The sealing material for a honeycomb structured body was applied on a side surface of the other honeycomb fired body, followed by placement of other spacers and then a next honeycomb fired body. By repeating the foregoing process, a honeycomb aggregated body, in which the honeycomb fired bodies were arranged in four columns and four rows, was manufactured. The thickness (distance between the honeycomb fired bodies) of the adhesive paste layer was controlled to be 1.0 mm. Further, by heating the honeycomb aggregated body at 120°C, the adhesive paste layer was solidified to be made into an adhesive layer. Accordingly, a ceramic block was manufactured.

The outer periphery of the ceramic block was cut with a diamond cutter into a round pillar shape.

Next, a peripheral sealing material paste layer having a thickness of 0.2 mm was formed on the periphery of the ceramic block using the sealing material for a honeycomb structured body according to Examples.

By drying the peripheral sealing material paste layer at 120°C, a honeycomb structured body having a round pillar shape with a diameter of 132.5 mm and a height of 150 mm, in which the peripheral sealing material layer was formed on the periphery of the ceramic block was manufactured.

The thus obtained honeycomb structured body was found to sufficiently exert functions as a filter for an exhaust gas purifying apparatus.

Tables 2 and 3 collectively show kinds of the inorganic fibers, kinds and blending amounts of the ion adsorbents, kinds and blending amounts of the oxide sols, pH values of the sealing materials for a honeycomb structured body, and evaluation results of the time course changes in the viscosity and evaluation results of the breaking strength, which were used or obtained in the sealing materials for a honeycomb structured body of Examples 1 to 20 and Comparative Examples 1 to 3.

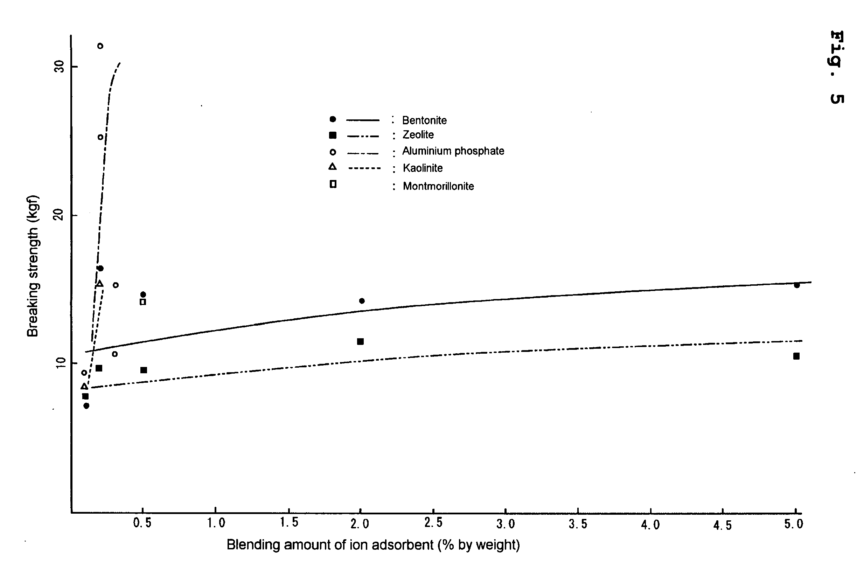

Fig. 5 is a graph that shows relations between the blending amount of each of the ion adsorbents and the breaking strength of the sealing materials for a honeycomb structured body prepared in Examples 1 to 20 and Comparative Examples 1 to 3.

Table 2

| | Inorganic fibers | Ion adsorbent | | Oxide sol | | pH | Results of evaluation | | | | |
|---|---|---|---|---|---|---|---|---|---|---|---|
| | | | Blending amount (% by weight) | | Blending amount (% by weight) | | Viscosity (Pa·S) | | | | Breaking strength |
| | Kinds | Kinds | | Kinds | | | Immediately after Preparation | 1 day after | 3 days after | 7 days after | kgf |
| Example 1 | A | Bentonite | 0.5 | - | - | 6.3 | 31.2 | 36.5 | 36.3 | 36.7 | 14.9 |
| Example 2 | A | Bentonite | 0.2 | - | - | 6.5 | 29.3 | 29.6 | 30.0 | 30.4 | 16.6 |
| Example 3 | A | Bentonite | 0.1 | - | - | 6.5 | 34.3 | 39.6 | 39.8 | 40.9 | 7.1 |
| Example 4 | A | Bentonite | 2.0 | - | - | 6.3 | 30.4 | 37.6 | 38.1 | 38.8 | 14.2 |
| Example 5 | A | Bentonite | 5.0 | - | - | 6.6 | 30.6 | 37.1 | 39.1 | 39.3 | 15.2 |
| Example 6 | A | Bentonite | 0.5 | Acidic silica sol | 20 | 6.4 | 31.6 | 31.4 | 31.8 | 33.2 | 13.8 |
| Example 7 | A | Bentonite | 0.5 | Alkaline silica sol | 20 | 8.2 | 30.4 | 31.8 | 34.9 | 35.2 | 12.3 |
| Example 8 | A | Montmorillonite | 0.5 | - | - | 6.6 | 32.6 | 36.1 | 36.6 | 36.8 | 14.3 |
| Example 9 | A | Kaolinite | 0.1 | - | - | 6.4 | 35.6 | 38.2 | 39.1 | 40.3 | 8.4 |
| Example10 | A | Kaolinite | 0.2 | - | - | 6.5 | 30.5 | 31.1 | 31.6 | 31.8 | 15.7 |
| Comparative Example 1 | A | - | 0 | Acidic silica sol | 20 | 6.7 | 36.1 | 42.3 | 42.3 | 43.2 | 4.5 |
| Comparative Example 2 | A | - | 0 | Alkaline silica sol | 20 | 8.4 | 30.2 | 300 | - | - | - |

Table 3

| | Inorganic fibers | Ion adsorbent | | Oxide sol | | pH | Results of evaluation | | | | |
| | Kinds | Kinds | Blending amount (% by weight) | Kinds | Blending amount (% by weight) | | Viscosity (Pa·S) | | | | Breaking strength |
| | | | | | | | Immediately after preparation | 1 day after | 3 days after | 7 days after | kgf |
|---|---|---|---|---|---|---|---|---|---|---|---|
| Example 11 | A | Zeolite | 0.5 | - | - | 8.4 | 36.1 | 185.5 | 300 | - | 9.6 |
| Example 12 | A | Zeolite | 0.1 | - | - | 8.5 | 36.7 | 99.1 | 300 | - | 7.8 |
| Example 13 | A | Zeolite | 0.2 | - | - | 8.5 | 34.3 | 170.9 | 300 | - | 9.9 |
| Example 14 | A | Zeolite | 2.0 | - | - | 8.5 | 37.8 | 79.1 | 300 | - | 11.5 |
| Example 15 | A | Zeolite | 5.0 | - | - | 8.4 | 36.9 | 70.8 | 300 | - | 10.6 |
| Example 16 | A | Aluminium phosphate | 0.10 | Alkaline silica sol | 20 | 3.8 | 36.4 | 40.6 | 41.9 | 300 | 9.4 |
| Example 17 | A | Aluminum phosphate | 0.25 | Alkaline silica sol | 20 | 4.6 | 34.5 | 38.6 | 38.9 | 39.1 | 15.3 |
| Example 18 | A | Aluminium phosphate | 0.20 | Alkaline silica sol | 20 | 3.7 | 35.1 | 36.7 | 38.1 | 38.6 | 25.5 |
| Example 19 | A | Aluminium phosphate | 0.25 | Acidic silica sol | 20 | 2.5 | 34.3 | 36.4 | 36.7 | 37.1 | 10.8 |
| Exampie 20 | A | Aluminium phosphate | 0.25 | - | - | 0.7 | 35.8 | 34.2 | 34.4 | 34.5 | 32.1 |
| Comparative Example 3 | A | Aluminium phosphate | 0.07 | - | - | 5.7 | 34.1 | 300 | - | - | 6.2 |

As shown in Table 2, the results of the viscosity of the obtained sealing materials (paste) for a honeycomb structured body revealed that the sealing materials for a honeycomb structured body (in Examples 1 to 10) containing, as an ion adsorbent, 0.1 to 5.0% by weight of a clay ion adsorbent such as bentonite, montmorillonite or kaolinite did not increase the viscosity even a week later, and further the breaking strength of the samples for evaluation was high, and thus the sealing materials for a honeycomb structured body were able to be favorably used as a sealing material for a honeycomb structured body. It was also found that, in the case where the sealing material for a honeycomb structured body contained, as an ion adsorbent, 0.1% by weight of bentonite or kaolinite, the breaking strength of the evaluation sample was slightly low but at an acceptable level, and in the case where the sealing material for a honeycomb structured body contained 0.2% by weight or more of the aforementioned adsorbent, the breaking strength was increased. On the other hand, in the case where the sealing material for a honeycomb structured body (in Comparative Example 1) contained no ion adsorbent, the viscosity thereof was gradually increased or breaking strength of the evaluation sample was low. In the sealing material for a honeycomb structured body (in Comparative Example 2) contained no ion adsorbent, the viscosity thereof become high after a lapse of one day. Those results indicate that the sealing materials might not be favorably used as a sealing material for a honeycomb structured body.

Moreover, as shown in Table 3, it was found that, in the case where the sealing materials for a honeycomb structured body (in Examples 11 to 15) contained 0.1 to 5.0% by weight of zeolite as an ion adsorbent, the breaking strength of the evaluation samples was high. Moreover, it was found that, in the case where the sealing materials for a honeycomb structured body (in Examples 16 to 20) contained 0.10 to 0.25% by weight of aluminum phosphate as an ion adsorbent, the viscosity thereof did not increase for a long period of time and the breaking strength of the evaluation samples showed radical increase as the blending amount of the ion adsorbent was increased. Those results indicate that those sealing materials for a honeycomb structured body can be favorably used as a sealing material for a honeycomb structured body.

On the other hand, it was found that, in the case where the sealing material for a honeycomb structured body (in Comparative Example 3) contained 0.07% by weight of aluminum phosphate, the viscosity thereof became high after a lapse of one day, and the breaking strength of the evaluation sample was low. This result indicates that the sealing material for a honeycomb structured body is not favorably used as a sealing material for a honeycomb structured body.

Although the foregoing results are those obtained when the inorganic fibers "A" shown in Table 1 were used, the same results were obtained when replacing the inorganic fibers "A" with the inorganic fibers "B". Presumably, use of silica adsorbents, alumina adsorbents, zeolite adsorbents (e.g. aluminosilicate zeolite, metallosilicate zeolite, aluminophosphate zeolite), or polyvalent metal salts (e.g. iron phosphate, magnesium phosphate, and aluminum fluoride) as an ion adsorbents may produce the same results as those obtained in the foregoing Examples and Comparative Examples.

(Other embodiments)

In the first embodiment, a ceramic block is manufactured by forming an adhesive paste layer on a predetermined side surface of each of the honeycomb fired bodies, successively placing other honeycomb fired bodies on the adhesive paste layer, repeating the foregoing forming and placing, solidifying the adhesive paste to form the adhesive layer, and then performing periphery cutting. In one of other embodiments, the ceramic block may be manufactured by the method mentioned below.

First, a plurality of honeycomb fired bodies are placed in parallel with one another in columns and rows, with a spacer interposed therebetween so that a parallel-arranged body of honeycomb fired bodies is produced. The spacer is designed to have the same thickness as the thickness of the adhesive layer to be formed between the honeycomb fired bodies. As a result, a gap corresponding to the thickness of the spacer is formed between the honeycomb fired bodies.

Successively, the gap formed between the honeycomb fired bodies placed in parallel with one another is filled in with the sealing material for a honeycomb structured body described in the first embodiment by using a filling apparatus. In filling the gap formed between the honeycomb fired bodies with the sealing material for a honeycomb structured body described in the first embodiment, the parallel-arranged body of honeycomb fired bodies is placed inside the inner space of a tubiform, and the sealing material paste supply unit is set up to the end face of the tubiform. Then, the sealing material for a honeycomb structured body described in the first embodiment is extruded from a paste chamber of the sealing material paste supply unit by using an extruding mechanism to fill the gap between the honeycomb fired bodies. By these methods, a laminated body of the honeycomb fired bodies having the plurality of honeycomb fired bodies with the gap filled with the sealing material for a honeycomb structured body as an adhesive can be manufactured.

Successively, the laminated body of the honeycomb fired bodies is heated by using a drying apparatus or the like to dry and solidify the adhesive so that an adhesive layer is formed. Periphery cutting is then performed on the resulting product. Through these processes, a ceramic block can be manufactured.

Furthermore, a honeycomb structured body may be manufactured in the method mentioned below according to one of the other embodiments.

Namely, three kinds of honeycomb fired bodies having almost the same shapes as those of the honeycomb fired bodies constituting the honeycomb structured body shown in Fig. 1 are prepared. These three kinds of honeycomb fired bodies having mutually different cross-sectional shapes can be prepared by altering the shape of a die to be used for extrusion-molding. In the honeycomb fired body shown in Fig. 1, a plurality of the cells are exposed by cutting. On the other hand, in the honeycomb fired body prepared by extrusion molding, the plurality of the cells are not exposed and a cell wall is formed on the periphery of the honeycomb fired body.

Thereafter, a plurality of these three kinds of honeycomb fired bodies are placed in columns and rows in parallel with one another, with a spacer interposed therebetween, to form a parallel-arranged body of honeycomb fired bodies having a virtually round shape in its cross-section perpendicular to the longitudinal direction. At this time, a gap having a thickness of the spacer is formed between the respective honeycomb fired bodies.

Successively, the parallel-arranged body of honeycomb fired bodies is placed in a filling apparatus having a cylindrical tubiform, and a gap formed between the honeycomb fired bodies and a gap formed between the honeycomb fired bodies and the tubiform were filled in with a sealing material for a honeycomb structured body described in the foregoing first embodiment.

A filling apparatus used in the present embodiment is provided with the cylindrical tubiform and a sealing material paste supply unit. The tubiform has a slightly larger inner diameter than the diameter of the parallel-arranged body of honeycomb fired bodies to be placed in the tubiform. Therefore, when the parallel-arranged body of honeycomb fired bodies is placed in the inner space of the tubiform, a gap is formed between the tubiform and the parallel-arranged body of honeycomb fired bodies.

The sealing material paste supply unit is configured to have a structure which enables simultaneously filling the gap between the honeycomb fired bodies and the gap between the tubiform and the parallel-arranged body of the honeycomb fired bodies with the sealing material for a honeycomb structured body described in the foregoing first embodiment, which is stored in the sealing material paste chamber.

According to the method mentioned earlier, the gap formed between the honeycomb fired bodies and the gap formed between the honeycomb fired bodies and the tubiform are filled in with the sealing material for a honeycomb structured body explained in the first embodiment and then the sealing material for a honeycomb structured body is solidified so that a honeycomb structured body is manufactured. In this manner, the adhesive layer and the peripheral sealing material layer can be simultaneously formed.

The cross-sectional shape of the honeycomb fired bodies is not limited to the three kinds, and the cross-section may have multiple kinds of shapes.

Moreover, in one of the other embodiments, a honeycomb structured body can be manufactured not by binding a plurality of the honeycomb fired bodies to form a ceramic block, but by applying the sealing material for a honeycomb structured body described in the first embodiment on the periphery of a single piece of a cylindrical honeycomb fired body which functions as a ceramic block, followed by solidification of the sealing material for a honeycomb structured body.

According to the honeycomb structured body of the present invention, the sealing material for a honeycomb structured body to be used for forming the adhesive layer and the sealing material for a honeycomb structured body to be used for forming the peripheral sealing material layer may be made of the same materials or different materials.

As for the adhesive, adhesive pastes that have been conventionally used for manufacturing the honeycomb structured body may be used as well as the sealing material for a honeycomb structured body of the present invention.

Although not particularly limited, the shape of the honeycomb fired bodies is preferably designed to easily bond the honeycomb fired bodies with one another when manufacturing a honeycomb structured body. For example, a shape having a square, rectangular, hexagonal, sector shape and the like in its cross-section may be used.

The shape of the honeycomb structured body of the present invention is not particularly limited to a round pillar shape, and may be a desired pillar shape such as a cylindroid shape, a pillar shape with a racetrack end face, and a polygonal pillar shape.

Although not particularly limited, the porosity of the honeycomb fired body is preferably 35 to 60%.

When the honeycomb structured body manufactured by using the aforementioned honeycomb fired body is used as a filter, the porosity of the honeycomb fired body of less than 35% may easily cause clogging in the filter. On the other hand, the porosity of the honeycomb fired body exceeding 60% may cause a reduction in the strength of the honeycomb fired body, resulting in easy breakage of the filter.

The average pore diameter of the honeycomb fired body is preferably 5 to 30 $\mu$m.

When the honeycomb structured body manufactured by using the aforementioned honeycomb fired body is used as a filter, the average pore diameter of the honeycomb fired body of less than 5 $\mu$m may easily cause clogging in the filter. On the other hand, the average pore diameter of the honeycomb fired body exceeding 30 $\mu$m may allow particulates to easily pass through the pores. As a result, the honeycomb fired body may fail to capture the particulates, resulting in a failure in functioning as a filter.

The porosity and the pore diameter can be measured through conventionally known methods such as a mercury porosimetry, Archimedes method, and a measuring method using a scanning electronic microscope (SEM).

The cell density in the cross-section perpendicular to the longitudinal direction of the honeycomb fired body is not particularly limited. A preferable lower limit of the cell density is 31.0 PCS/cm$^2$ (200 pcs/inch$^2$) and a preferable upper limit thereof is 93.0 pcs/cm$^2$ (600 pcs/inch$^2$). A more preferable lower limit of the cell density is 38.8 pcs/cm$^2$ (250 pcs/inch$^2$) and a more preferable upper limit thereof is 77.5 pcs/cm$^2$ (500 pcs/inch$^2$) .

Further, the thickness of the cell walls of the honeycomb fired body is not particularly limited, and preferably 0.1 to 0.4 mm.

The main component of constituent materials of the honeycomb fired body is not limited to silicon carbide. Examples of other ceramic materials include ceramic powders, for example, nitride ceramics such as aluminum nitride, silicon nitride, boron nitride and titanium nitride; carbide ceramics such as zirconium carbide, titanium carbide, tantalum carbide and tungsten carbide; oxide ceramics such as alumina, zirconia, cordierite, mullite, and aluminum titanate; and the like.

Non-oxide ceramics are preferable, and silicon carbide is more preferable among the above components, because they are excellent in thermal resistance properties, mechanical strength, thermal conductivity and the like. Moreover, examples of the constituent material of the honeycomb fired body also include silicon-containing ceramics, in which metallic silicon is blended with the foregoing ceramics, as well as a ceramic material such as ceramic in which the forgoing ceramics is bound by silicon or silicate compounds. The ceramics (silicon-containing silicon carbide) in which metallic silicon is blended with the silicon carbide are preferably used.

A silicon-containing silicon carbide ceramic containing 60% by weight or more of silicon carbide is especially preferable.

The organic binder used when preparing the wet mixture is not particularly limited, and examples thereof include methylcellulose, carboxymethylcellulose, hydroxyethylcellulose, polyethylene glycol and the like. Methylcellulose is preferable among the above examples. A blending amount of the organic binder is preferably 1 to 10 parts by weight with respect to 100 parts by weight of ceramic powder.

The plasticizer used when preparing the wet mixture is not particularly limited, and examples thereof include glycerin or the like. The lubricant is not particularly limited, and examples thereof include polyoxyalkylene-based compounds such as polyoxyethylene alkyl ether and polyoxypropylene alkyl ether, or the like. Specific examples of the lubricant include polyoxyethylene monobutyl ether, polyoxypropylene monobutyl ether and the like.

Moreover, the plasticizer and the lubricant may optionally not be contained in the wet mixture.

In addition, a dispersant solution may be used upon preparing a wet mixture, and examples of the dispersant solution include water, an organic solvent such as benzene, alcohol such as methanol and the like.

Moreover, a molding auxiliary may be added to the wet mixture.

The molding auxiliary is not particularly limited, and examples thereof include ethylene glycol, dextrin, fatty acid, fatty acid soap, polyalcohol and the like.

Furthermore, a pore-forming agent such as balloons that are fine hollow spheres including oxide-based ceramics, spherical acrylic particles, graphite and the like may be added to the wet mixture, if necessary.

The balloon is not particularly limited, and examples thereof include alumina balloon, glass micro balloon, shirasu balloon, fly ash balloon (FA balloon), mullite balloon and the like. Alumina balloon is preferable among the above examples.

The plug material paste for plugging the cells is not particularly limited, a plug to be manufactured through the subsequent processes preferably has a porosity of 30 to 75%, and for example, it is possible to use a plug material paste having the same composition as that of the wet mixture of the raw material.

The catalyst to convert and/or purify exhaust gases may be supported on the honeycomb structured body, and preferable examples of the catalyst to be supported include noble metals such as platinum, palladium and rhodium. Platinum is more preferable among these. Moreover, an alkali metal such as sodium and potassium, and an alkaline earth metal such as barium may be used as other catalysts. These catalysts may be used alone, or two or more kinds of these may be used in combination.

The above description has only discussed the honeycomb structured body (honeycomb filter) in which either one end portion of each of the cells is plugged. However, the honeycomb structured body of the present invention does not always need to have an end portion of each cell plugged, and such honeycomb structured bodies may be preferably used as a catalyst supporting carrier.

BRIEF DESCRIPTION OF THE DRAWINGS

Fig. 1 is a perspective view that schematically shows one example of a honeycomb structured body of the present invention.

Fig. 2 (a) is a perspective view that schematically shows one example of a honeycomb fired body that constitutes the honeycomb structured body of the present invention, and Fig. 2 (b) is an A-A line cross-sectional view of the honeycomb fired body shown in Fig. 2(a).

Fig. 3(a) is a perspective view that shows a method for bonding the honeycomb fired bodies, and Fig. 3(b) is a perspective view that shows a sample for evaluation prepared by cutting the bonded honeycomb fired bodies.

Fig. 4 is a perspective view that schematically shows a method for measuring the breaking strength of the sealing material for a honeycomb structured body (the adhesive layer) in the sample for evaluation.

Fig. 5 is a graph that shows relations between the blending amount of each of the ion adsorbents with the breaking strength of the sealing materials for a honeycomb structured body prepared in Examples and Comparative Examples.

EXPLANATION OF SYMBOLS

| | |
|---|---|
| 100 | Honeycomb structured body |
| 101, 101a | Adhesive layer |
| 102 | Peripheral sealing material layer |
| 103 | Ceramic block |
| 110, 110a | Honeycomb fired body |
| 111 | Cell |
| 112 | Plug |
| 113 | Cell wall |
| 300 | Bonded body |
| 300a | Sample for evaluation |
| 310 | Lower jig |
| 311 | Sample supporting rod |
| 320 | Upper jig |
| 321 | Sample contacting portion |
| G | Exhaust gas |

**Claims**

1.  A sealing material for a honeycomb structured body, comprising:

    inorganic fibers comprising a biosoluble inorganic compound;
    inorganic particles; and
    an ion adsorbent in an amount of 0.1% by weight or more.

2.  The sealing material for a honeycomb structured body according to Claim 1,
    wherein
    the inorganic compound is at least one member selected from the group consisting of alkali metal compounds and alkaline earth metal compounds.

3.  The sealing material for a honeycomb structured body according to Claim 1 or 2,
    wherein
    the ion adsorbent is at least one member selected from the group consisting of silica adsorbents, alumina adsorbents, zeolite adsorbents, clay adsorbents, mesoporous adsorbents, polyvalent metal salts, and activated carbon.

4. The sealing material for a honeycomb structured body according to Claim 3,
wherein
the ion adsorbent is a clay adsorbent.

5. The sealing material for a honeycomb structured body according to Claim 4,
wherein
the clay adsorbent is at least one member selected from the group consisting of bentonite, activated white clay, and montmorillonite.

6. The sealing material for a honeycomb structured body according to Claim 3,
wherein
the ion adsorbent is at least one of a zeolite adsorbent and activated carbon.

7. The sealing material for a honeycomb structured body according to Claim 6,
wherein
the zeolite adsorbent is at least one member selected from the group consisting of alminosilicate zeolite, metallosilicate zeolite, and aluminophosphate zeolite.

8. The sealing material for a honeycomb structured body according to Claim 3,
wherein
the ion adsorbent is a polyvalent metal salt.

9. The sealing material for a honeycomb structured body according to Claim 8,
wherein
the polyvalent metal salt is at least one member selected from the group consisting of aluminum phosphate, iron phosphate, magnesium phosphate, and aluminum fluoride.

10. The sealing material for a honeycomb structured body according to any one of Claims 1 to 9, further comprising an oxide sol.

11. A honeycomb structured body comprising:

a ceramic block comprising a honeycomb fired body in which a plurality of through holes are longitudinally formed with a partition wall interposed therebetween; and
a peripheral sealing material layer formed on a peripheral surface of the ceramic block,
wherein
the peripheral sealing material layer is formed of the solidified sealing material for a honeycomb structured body according to any one of Claims 1 to 10.

12. The honeycomb structured body according to Claim 11,
wherein
the ceramic block comprises a plurality of the honeycomb fired bodies, and
an adhesive layer formed between side surfaces of the plurality of the honeycomb fired bodies.

13. The honeycomb structured body according to Claim 12,
wherein
the adhesive layer is formed of a solidified adhesive.

14. The honeycomb structured body according to Claim 13,
wherein
the adhesive is the sealing material for a honeycomb structured body according to any one of Claims 1 to 10.

15. A method for manufacturing a honeycomb structured body, comprising:

molding ceramic materials to construct a honeycomb molded body in which a plurality of through holes are longitudinally formed with a partition wall interposed therebetween;
constructing a ceramic block comprising a honeycomb fired body obtained after heat treatment of the honeycomb molded body; and

solidifying a peripheral sealing material paste layer formed on a peripheral surface of the ceramic block to form a peripheral sealing material layer,

said method further comprising

preparing a sealing material for a honeycomb structured body by mixing at least inorganic fibers comprising a biosoluble inorganic compound, inorganic particles, and an ion adsorbent in an amount of 0.1% by weight or more, the peripheral sealing material paste layer being formed of the sealing material for a honeycomb structured body.

16. The method for manufacturing a honeycomb structured body according to Claim 15, further comprising bonding a plurality of the honeycomb fired bodies with the adhesive layer interposed therebetween to construct the ceramic block.

17. The method for manufacturing a honeycomb structured body according to Claim 15 or 16, wherein

the inorganic compound is at least one member selected from the group consisting of alkali metal compounds and alkaline earth metal compounds.

18. The method for manufacturing a honeycomb structured body according to any one of Claims 15 to 17, wherein

the ion adsorbent is at least one member selected from the group consisting of silica adsorbents, alumina adsorbents, zeolite adsorbents, clay adsorbents, mesoporous adsorbents, polyvalent metal salts, and activated carbon.

19. The method for manufacturing a honeycomb structured body according to Claim 18, wherein

the ion adsorbent is a clay adsorbent.

20. The method for manufacturing a honeycomb structured body according to Claim 19, wherein

the clay adsorbent is at least one member selected from the group consisting of bentonite, activated white clay, and montmorillonite.

21. The method for manufacturing a honeycomb structured body according to Claim 18, wherein

the ion adsorbent is at least one of a zeolite adsorbent and activated carbon.

22. The method for manufacturing a honeycomb structured body according to Claim 21, wherein

the zeolite adsorbent is at least one member selected from the group consisting of alminosilicate zeolite, metallosilicate zeolite, and aluminophosphate zeolite.

23. The method for manufacturing a honeycomb structured body according to Claim 18, wherein

the ion adsorbent is a polyvalent metal salt.

24. The method for manufacturing a honeycomb structured body according to Claim 23, wherein

the polyvalent metal salt is at least one member selected from the group consisting of aluminum phosphate, iron phosphate, magnesium phosphate, and aluminum fluoride.

25. The method for manufacturing a honeycomb structured body according to any one of Claims 15 to 24, wherein

the sealing material for a honeycomb structured body further comprises an oxide sol.

26. The method for manufacturing a honeycomb structured body according to Claim 16, wherein

the adhesive layer is formed of a solidified adhesive, the adhesive being the sealing material for a honeycomb structured body according to any one of Claims 1 to 10.

Fig. 1

Fig. 2

(a)

(b)

A-A line cross-sectional view

**Fig. 3**

(a)

(b)

Fig. 4

Fig. 5

**EUROPEAN SEARCH REPORT**

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 006 264 A1 (NGK INSULATORS LTD [JP]) 24 December 2008 (2008-12-24) | 1-5 | INV. C04B37/00 |
| A | * paragraph [0030] - paragraph [0033] * * paragraph [0039] * * paragraph [0051] * | 12-14,26 | C04B38/00 B01J35/04 F01N3/022 |
| X | EP 1 997 789 A1 (NGK INSULATORS LTD [JP]; NGK ADREC CO LTD [JP]) 3 December 2008 (2008-12-03) | 1-5 | |
| A | * paragraph [0075]; table 1 * | 12-14,26 | |
| X | EP 1 860 082 A1 (NGK INSULATORS LTD [JP]) 28 November 2007 (2007-11-28) * paragraph [0029] * * paragraph [0036] * * paragraph [0040]; table 1 * * paragraph [0044] * | 1-4, 10-19, 25,26 | |
| X,P | EP 2 119 689 A1 (NGK INSULATORS LTD [JP]) 18 November 2009 (2009-11-18) * paragraph [0028] * * paragraph [0059] * | 1,3,4 | |
| X | -& WO 2008/088011 A1 (NGK INSULATORS LTD [JP]; INOUE KATSUHIRO [JP]; KAWAI MASAAKI [JP]; HIR) 24 July 2008 (2008-07-24) * paragraph [0028] * * paragraph [0059] * | 1,3,4 | |
| X,P | EP 2 143 694 A2 (NGK INSULATORS LTD [JP]) 13 January 2010 (2010-01-13) * paragraph [0039] - paragraph [0040] * * paragraph [0064] * * paragraph [0081]; examples 1, 8-14 * | 1-4, 10-19, 25,26 | |

TECHNICAL FIELDS SEARCHED (IPC)

C04B

-/--

The present search report has been drawn up for all claims

| Place of search | Date of completion of the search | Examiner |
|---|---|---|
| Munich | 20 April 2010 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 00 1810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 930 058 A2 (IBIDEN CO LTD [JP]) 11 June 2008 (2008-06-11)<br><br>* examples 1-12 *<br>----- | 1-4, 10-19, 25,26 | |
| | | | **TECHNICAL FIELDS SEARCHED** (IPC) |

The present search report has been drawn up for all claims

| Place of search | Date of completion of the search | Examiner |
|---|---|---|
| Munich | 20 April 2010 | Munro, Brian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 2 236 480 A1**

**ANNEX TO THE EUROPEAN SEARCH REPORT**
**ON EUROPEAN PATENT APPLICATION NO.**
EP 10 00 1810

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2010

| Patent document cited in search report | | Publication date | Patent family member(s) | | Publication date |
|---|---|---|---|---|---|
| EP 2006264 | A1 | 24-12-2008 | WO 2007111056 A1 | | 04-10-2007 |
| | | | KR 20090007723 A | | 20-01-2009 |
| | | | US 2009029105 A1 | | 29-01-2009 |
| EP 1997789 | A1 | 03-12-2008 | WO 2007119407 A1 | | 25-10-2007 |
| | | | KR 20090020547 A | | 26-02-2009 |
| | | | US 2009011178 A1 | | 08-01-2009 |
| EP 1860082 | A1 | 28-11-2007 | WO 2006098191 A1 | | 21-09-2006 |
| | | | KR 20070041687 A | | 19-04-2007 |
| | | | US 2008187712 A1 | | 07-08-2008 |
| EP 2119689 | A1 | 18-11-2009 | WO 2008088011 A1 | | 24-07-2008 |
| | | | US 2009288758 A1 | | 26-11-2009 |
| WO 2008088011 | A1 | 24-07-2008 | EP 2119689 A1 | | 18-11-2009 |
| | | | US 2009288758 A1 | | 26-11-2009 |
| EP 2143694 | A2 | 13-01-2010 | JP 2010012415 A | | 21-01-2010 |
| | | | US 2010003453 A1 | | 07-01-2010 |
| EP 1930058 | A2 | 11-06-2008 | NONE | | |

EPO FORM P0459

For more details about this annex : see Official Journal of the European Patent Office, No. 12/82

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05110578 A1